(19) Europäisches Patentamt
European Patent Office
Office européen des brevets

(11) **EP 3 580 826 B1**

(12) **EUROPÄISCHE PATENTSCHRIFT**

(45) Veröffentlichungstag und Bekanntmachung des Hinweises auf die Patenterteilung:
**27.04.2022   Patentblatt 2022/17**

(21) Anmeldenummer: **18704234.6**

(22) Anmeldetag: **08.02.2018**

(51) Internationale Patentklassifikation (IPC):
**G05F 1/67** (2006.01)    **H02J 3/38** (2006.01)
**H02S 50/00** (2014.01)

(52) Gemeinsame Patentklassifikation (CPC):
**G05F 1/67; H02J 3/381; H02S 50/00;**
H02J 2300/24; H02J 2300/26; Y02E 10/56

(86) Internationale Anmeldenummer:
**PCT/EP2018/053226**

(87) Internationale Veröffentlichungsnummer:
**WO 2018/146226 (16.08.2018 Gazette 2018/33)**

(54) **VERFAHREN ZUR BESTIMMUNG EINER MAXIMAL MÖGLICHEN LEISTUNG EINER PV-ANLAGE UND PV-ANLAGE**

METHOD FOR DETERMINING THE MAXIMUM POSSIBLE OUTPUT OF A PV SYSTEM, AND PV SYSTEM

PROCÉDÉ DE DÉTERMINATION D'UNE PUISSANCE POSSIBLE MAXIMALE D'UNE INSTALLATION PV ET INSTALLATION PV

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2017   DE 102017102771**

(43) Veröffentlichungstag der Anmeldung:
**18.12.2019   Patentblatt 2019/51**

(73) Patentinhaber: **SMA Solar Technology AG 34266 Niestetal (DE)**

(72) Erfinder:
• **LASCHINSKI, Joachim 34131 Kassel (DE)**
• **BETTENWORT, Gerd 34119 Kassel (DE)**

(56) Entgegenhaltungen:
DE-A1-102011 054 971    DE-B3-102012 218 366
US-A1- 2016 105 146

**Beschreibung**

TECHNISCHES GEBIET DER ERFINDUNG

Die Erfindung bezieht sich auf ein Verfahren zur Bestimmung einer maximal möglichen Leistung $P_{max}$ einer abgeregelt betriebenen Photovoltaik (PV) - Anlage. Mit einer abgeregelt betriebenen PV-Anlage ist insbesondere eine an ein Energieversorgungsnetz (EVN) angeschlossene PV-Anlage gemeint, deren Leistung - beispielsweise aufgrund einer expliziten Anforderung des Energieversorgers, oder aufgrund einer oberhalb der Nominalfrequenz herrschenden Frequenz der Wechselspannung in dem EVN - begrenzt wird. In diesem Fall darf die PV-Anlage lediglich einen Teil ihrer maximal möglichen Leistung $P_{max}$ in das EVN einspeisen. Bei einer derartigen Anforderung kann es vorkommen, dass die erlaubte Leistung als Bruchteil der maximal möglichen Leistung $P_{max}$ definiert wird. Beispielsweise soll die PV-Anlage auf 70% ihrer aktuell maximal möglichen Leistung $P_{max}$ abgeregelt werden, wobei diese Anforderung zeitlich nachzuführen ist. Alternativ kann auch gefordert sein, dass die PV-Anlage eine definierte Regelleistung von z.B. 40% relativ zu Ihrer aktuell maximal möglichen Leistung $P_{max}$ vorhalten soll.

Um derartige Anforderungen einhalten zu können, ist es erforderlich, auch im abgeregelten Zustand der PV-Anlage deren maximal mögliche Leistung $P_{max}$ jederzeit zu kennen bzw. zu verfolgen, um bei einer Änderung der maximal möglichen Leistung auch die in das EVN eingespeiste Leistung der PV-Anlage neu justieren zu können.

STAND DER TECHNIK

Üblicherweise werden zur Bestimmung einer maximal möglichen Leistung $P_{max}$ einer PV-Anlage separate Einstrahlungssensoren verwendet. Bei den Einstrahlungssensoren handelt es sich um PV-Zellen, die ein zu einer aktuell herrschenden Einstrahlung proportionales Messsignal liefern. Wird eine PV-Anlage mit einem oder mehreren Einstrahlungssensoren versehen, und sind die Sensoren so angeordnet, dass sie die Einstrahlung der PV-Module des PV-Generators repräsentativ erfassen, so kann aus den Messsignalen der Sensoren auf die maximal mögliche Leistung $P_{max}$ der PV-Anlage geschlossen werden. Bei den Einstrahlungssensoren handelt es sich jedoch um separate Komponenten, die bei der PV-Anlage zusätzlich zu den PV-Modulen vorzuhalten sind. Darüber hinaus unterscheiden sich im Allgemeinen die Zellentypen von Einstrahlungssensor und PV-Modul. Zusätzlich kann auch eine unterschiedliche Einbettung der PV-Zellen zwischen Einstrahlungssensor und PV-Modul vorliegen. Dabei charakterisiert die Einbettung der PV-Zellen die Art und Weise, wie die PV-Zellen in ihrem jeweiligen Gehäuse verbaut sind. Diese Unterschiede bedingen prinzipiell eine unterschiedliche elektrische wie auch thermische Reaktion der PV-Zellen auf eine bestimmte Einstrahlung. Sie erfordern daher eine Kalibrierung der Sensor - Messsignale auf die verwendeten PV-Module, wie auch regelmäßige Kalibrierungsüberprüfungen, was dieses Verfahren - insbesondere für kleinere PV-Anlagen - aufwendig gestaltet.

Aus der Schrift US 2011 / 0196543 A1 ist ein Verfahren zur Bestimmung einer maximal möglichen Leistung einer abgeregelt betriebenen PV-Anlage bekannt. Hierbei weist die PV-Anlage zumindest zwei separat regelbare Anlagenteile auf. Ein erster Anlagenteil wird dabei ohne Begrenzung der maximal möglichen Leistung betrieben. In einer Ausführungsform eines dort geschilderten Verfahrens wird mit Hilfe der Leistung des ersten Anlagenteils die maximale Leistung der gesamten PV-Anlage abgeschätzt. Ein zweiter Anlagenteil wird derart abgeregelt betrieben, dass die PV-Anlage einer vordefinierten Abregelungsanforderung genügt. Dabei ist es jedoch erforderlich, gewisse Anlagenteile stets ohne Beschränkung ihrer Leistung zu betreiben, was zumindest bei einer insgesamt starken Abregelung der PV-Anlage nachteilig ist.

Weiterhin ist aus der Schrift DE 10 2010 038 941 A1 ein Verfahren zur Bestimmung der maximal möglichen Leistung einer PV-Anlage mit ein oder mehreren Wechselrichtern bekannt, die über einen Zeitraum gemittelt abgeregelt betrieben wird. Dabei wird der / werden die Wechselrichter der PV-Anlage in dem Zeitraum unterschiedlich betrieben. Aus den unterschiedlichen Betriebsdaten des oder der Wechselrichter wird eine in dem Zeitraum maximal mögliche Einspeisemenge - und damit eine über den Zeitraum gemittelte maximal mögliche Leistung der PV-Anlage bestimmt. Dabei wird innerhalb des Zeitraums jedoch eine zeitliche Fluktuation der eingespeisten Leistung um den Sollwert der reduzierten Leistung toleriert.

Die Schrift US 2016/0105146 A1 offenbart ein Verfahren zum Messen der maximalen Leistung, die von einer photovoltaischen Anordnung zur Verfügung steht, ohne dass angeschlossene Wechselstromvorrichtungen zum Zeitpunkt der Messung Strom verbrauchen müssen. Bei dem Verfahren wird ein an die PV-Anordnung angeschlossener Leistungswandler in definierten Intervallen während kurzer Zeiträume deaktiviert. Während dieser Zeiträume erfolgt einerseits eine Messung einer Leerlaufspannung, sobald diese erreicht ist. Andererseits wird die PV-Anordnung über einen Widerstand kurzgeschlossen, wobei ein Kurzschlussstrom gemessen wird. Die Messungen werden an eine zentrale Steuerungseinheit zur Berechnung der maximalen Leistung übermittelt.

In dem Artikel "Comparison of Photovoltaic Array Maximum Power Point Tracking Techniques", IEEE TRANSACTIONS ON ENERGY CONVERSION, VOL. 22, JUNE 2007, NO. 2, 439-449, werden verschiedene MPP-Tracking Verfahren offenbart. Während bei einem Verfahren eine MPP-Spannung über eine Konstante mit einer Leerlaufspannung verknüpft wird, offenbart ein weiteres Verfahren eine Verknüpfung eines MPP-Stroms über eine weitere Konstante mit einem Kurzschlussstrom.

## AUFGABE DER ERFINDUNG

Der Erfindung liegt die Aufgabe zugrunde, ein Verfahren zur Bestimmung einer maximal möglichen Leistung $P_{max}$ einer abgeregelt, d.h. mit reduzierter Leistung, betriebenen PV-Anlage aufzuzeigen, dass eine möglichst geringe Fluktuation einer eingespeisten Leistung um den Sollwert der reduzierten Leistung aufweist und gleichzeitig eine möglichst starke Abregelung der PV-Anlage erlaubt. Dabei soll das Verfahren möglichst einfach und kostengünstig umsetzbar sein. Der Erfindung liegt weiterhin die Aufgabe zugrunde, eine PV-Anlage mit einem derartigen Verfahren aufzuzeigen.

## LÖSUNG

Die Aufgabe der Erfindung wird durch ein Verfahren mit den Merkmalen des unabhängigen Patentanspruchs 1 gelöst. Die abhängigen Patentansprüche 2 bis 10 sind auf bevorzugte Ausführungsformen des Verfahrens gerichtet. Der nebengeordnete Patentanspruch 11 zielt auf eine Photovoltaik (PV)-Anlage zur Durchführung des Verfahrens. Die abhängigen Patentansprüche 12 bis 15 sind auf bevorzugte Ausführungsformen der PV-Anlage gerichtet.

## BESCHREIBUNG DER ERFINDUNG

Bei einem erfindungsgemäßen Verfahren zur Bestimmung einer aktuell maximal möglichen Leistung $P_{max}$ einer abgeregelt betriebenen Photovoltaik (PV) - Anlage umfasst die PV-Anlage einen PV-Generator mit mindestens einem String. Dabei umfasst der mindestens eine String eine Reihenschaltung von PV-Modulen, bei der zumindest ein PV-Modul über eine Koppeleinheit mit benachbarten PV-Modulen des Strings verbunden ist. Die PV-Anlage umfasst weiterhin einen Wechselrichter, der ausgangsseitig mit einem Energieversorgungsnetz (EVN) und eingangsseitig mit dem PV-Generator verbunden ist, sowie eine Steuerung zur Steuerung des Wechselrichters und der Koppeleinheit. Dabei ist die Steuerung in Verbindung mit der Koppeleinheit ausgelegt, während eines Betriebs der PV-Anlage eine Leistungsentnahme des ihr zugeordneten PV-Moduls relativ zu einer Leistungsentnahme der benachbarten PV-Module zu variieren. Das Verfahren umfasst die Schritte:

- Bestimmung von Referenzwerten für das der Koppeleinheit zugeordnete PV-Modul umfassend eine Referenz-MPP-Leistung $P_{MPP,Ref}$ und zumindest eines der Referenz-MPP-Leistung $P_{MPP,Ref}$ zugeordneten Wertes aus Kurzschluss-Referenzstrom $I_{SC,Ref}$ und/oder Leerlauf-Referenzspannung $U_{0,Ref}$,
- Betreiben der PV-Anlage in Reaktion auf ein Abregelungssignal in einem abgeregelten Zustand mit einer gegenüber der aktuell maximal möglichen Leistung der PV-Anlage geringeren Leistung P. Das Verfahren ist **dadurch gekennzeichnet,** dass
- im abgeregelten Zustand der PV-Anlage für das der Koppeleinheit zugeordnete PV-Modul

    - ein einen Kurzschluss-Betriebsmodus kennzeichnender zweiter Stromwert $I_{sc,2}$ bestimmt wird, und/oder
    - ein einen Leerlauf-Betriebsmodus kennzeichnender zweiter Spannungswert $U_{0,2}$ bestimmt wird, und

- wobei die aktuell maximal mögliche Leistung $P_{max}$ im abgeregelten Zustand der PV-Anlage aus

    - dem zweiten Stromwert $I_{SC,2}$, dem Kurzschluss-Referenzstrom $I_{SC,Ref}$ und der Referenz-MPP-Leistung $P_{MPP,Ref}$, oder
    - dem zweiten Spannungswert $U_{0,2}$, der Leerlauf-Referenzspannung $U_{0,Ref}$ und der Referenz-MPP-Leistung $P_{MPP,Ref}$, oder
    - einer Kombination aus zweitem Stromwert $I_{SC,2}$, Kurzschluss-Referenzstrom $I_{SC,Ref}$, zweitem Spannungswert $U_{0,2}$, Leerlauf-Referenzspannung $U_{0,Ref}$ und der Referenz-MPP Leistung $P_{MPP,Ref}$

bestimmt wird.

Ein Wert des Kurzschluss-Referenzstromes $I_{SC,Ref}$ bzw. der Leerlauf-Referenzspannung $U_{0,Ref}$ ist der Referenz-MPP-Leistung $P_{MPP,Ref}$ dann zugeordnet, wenn eine Bestimmung der Werte so zeitnah zueinander erfolgt, dass eine Veränderung der Einstrahlung auf, oder einer Temperatur des PV-Moduls während der Dauer der verschiedenen Messungen vernachlässigt werden kann, mit anderen Worten, wenn sich also eine Strom-Spannungs (IU) - Kennlinie des PV-Moduls während der Bestimmung der Referenzwerte nicht - zumindest nicht signifikant - geändert hat.

Gemäß der Erfindung wird das über die Koppeleinheit an den String angebundene PV-Modul als Sensor zur Bestimmung der maximal möglichen Leistung $P_{max}$ des PV-Generators bzw. der PV-Anlage genutzt. Hierbei wird das betroffene PV-Modul lediglich zur Bestimmung der Referenzwerte - und dort gegebenenfalls lediglich kurzzeitig - in dessen Maximum-Power-Point (MPP) versetzt. Das kann, muss aber nicht im abgeregelten Betrieb der PV-Anlage erfolgen. Unter kurzzeitig ist im Sinne der Erfindung ein Zeitraum zu verstehen, der ausreichend lang ist, einen den jeweiligen Betriebsmodus kennzeichnenden Strom- und/oder Spannungswert zu bestimmen. Dieser Zeitraum ist üblicherweise kleiner, als eine Verweildauer bei einer bestimmten Spannung des PV-Generators während eines Schrittes innerhalb eines MPP-Tracking Verfahrens. Insbesondere ist unter kurzzeitig ein Zeitraum zu verstehen, der kleiner als 5 sec, besonders bevorzugt kleiner als 1 sec ist.

Die weiteren Messungen hingegen - beispielsweise die Bestimmung des zweiten Stromwertes $I_{SC,2}$ und/oder des zweiten Spannungswertes $U_{0,2}$ - erfolgen im kurzschlussnahen und/oder leerlaufnahen Betriebsmodus des PV-Moduls und sind daher mit lediglich geringer Leistungsentnahme des PV-Moduls verbunden. Gegebenenfalls kann das PV-Modul während dieser Messungen über die Koppeleinheit sogar von den benachbarten PV-Modulen des Strings abgetrennt werden, so dass quasi keine Leistung aus dem PV-Modul entnommen und an den String abgegeben wird. Daher ist es nicht erforderlich, im abgeregelten Zustand einen Teil der PV-Anlage im MPP zu betreiben und aufgrund dessen auch möglich, die PV-Anlage extrem stark abzuregeln. Dabei bleibt selbst im stark abgeregelten Zustand die maximal mögliche Leistung $P_{max}$ der PV-Anlage stets leicht bestimmbar. Für den Fall, dass lediglich ein PV-Modul des PV-Generators über eine Koppeleinheit an benachbarte PV-Module des zumindest einen Strings angebunden ist, kann die maximal mögliche Leistung $P_{max}$ anhand einer der folgenden Gleichungen berechnet werden

$$P_{max} = N \ \frac{I_{SC,2}}{I_{SC,Ref}} \ P_{MPP,Ref} \qquad\qquad \text{(Gl. 1a)}$$

$$P_{max} = N \ \frac{U_{0,2}}{U_{0,Ref}} \ P_{MPP,Ref} \qquad\qquad \text{(Gl. 1b)}$$

$$P_{max} = N \ \frac{I_{SC,2}}{I_{SC,Ref}} \ \frac{U_{0,2}}{U_{0,Ref}} \ P_{MPP,Ref} \qquad\qquad \text{(Gl. 1c)}$$

je nachdem, ob die Bestimmung unter Berücksichtigung des zweiten Stromwertes $I_{SC,2}$ (Gl. 1a), des zweiten Span- nungswertes $U_{0,2}$ (Gl. 1b), oder einer Kombination aus zweitem Stromwert $I_{SC,2}$ und zweitem Spannungswert $U_{0,2}$ erfolgt (Gl. 1c). Bei der Bestimmung der maximal möglichen Leistung $P_{max}$ nach einer der der Gleichungen (Gl. 1a - Gl. 1c) handelt es sich jeweils um eine Abschätzung der maximal möglichen Leistung $P_{max}$, die, je nachdem, welche der Gleichungen (Gl. 1a - Gl. 1c) herangezogen wird, leicht unterschiedliche Werte für die maximal mögliche Leistung $P_{max}$ liefern kann. Dabei bezeichnet N die Anzahl der PV-Module innerhalb des PV-Generators. Sofern in dem PV-Generator mehrere PV-Module über Koppeleinheiten vorgesehen sind, die jeweils für eine Anzahl $n_i$ der insgesamt vorhandenen PV-Module N als repräsentativ gelten, ergibt sich die maximal mögliche Leistung $P_{max}$ der PV-Anlage aus einer- gegebenenfalls gewichteten - Mittelung der verschiedenen Messungen. Dabei orientiert sich die Gewichtung einer einzelnen Messung i daran, wie viel PV-Module $n_i$ diese Messung repräsentiert bzw. an dem Verhältnis $n_i/N$.

Im Allgemeinen ist eine Bestimmung nach Gleichung Gl. 1c relativ zu einer Bestimmung nach einer der Glei- chungen Gl. 1a und Gl. 1b genauer an dem tatsächlichen Wert der maximal möglichen Leistung, da gemäß Gl. 1c sowohl eine Einstrahlungs- als auch eine Temperaturabhängigkeit unabhängig voneinander berücksichtigt werden. Eine Verwendung von Gleichung Gl. 1a oder auch Gl. 1b kann jedoch trotzdem vorteilhaft sein, wenn beispielsweise eine PV-Anlage bauartbedingt, beispielsweise aufgrund einer einfach gestalteten Koppeleinheit, lediglich einen der zwei Betriebsmodi aus kurzschlussnahem und leerlaufnahem Betriebsmodus des ihr zugeordneten PV-Moduls erlaubt. Dies erfordert jedoch üblicherweise, dass die Bestimmung der Referenzwerte - verglichen mit einer Abschätzung der maximal möglichen Leistung $P_{MPP}$ unter Verwendung der Gleichung Gl. 1c und je nach geforderter Genauigkeit - in kürzeren Zeitabständen erfolgen muss. Dennoch kann, wie nachstehend erläutert, eine evtl. vorhandene Temperaturänderung des PV-Moduls bzw. dessen PV-Zellen in der Abschätzung zumindest noch berücksichtigt werden. So kennzeichnet in Gleichung Gl. 1c das Verhältnis des zweiten Stromwerts zum Referenzstromwert gemäß $I_{SC,2}/I_{SC,Ref}$ den Einfluss einer Einstrahlungsänderung $\Delta E_{Einstr}$ auf die maximal mögliche Leistung $P_{max}$, während das Verhältnis des zweiten Spannungswertes zur Referenzspannung gemäß $U_{0,2}/U_{0,Ref}$ den Einfluss einer Temperaturänderung des PV-Moduls bzw. dessen PV-Zellen charakterisiert. Gleichung Gl. 1c lässt sich somit auch in der Form

$$P_{max} = N * \frac{I_{SC,2}}{I_{SC,Ref}} * f(\Delta T_{Umg}, \Delta E_{Eins}, \Delta t) * P_{MPP,Ref} \qquad \text{(Gl. 2)}$$

darstellen, wobei der Einfluss der Temperaturänderung des PV-Moduls bzw. dessen PV-Zellen in einer Funktion $f=f(\Delta T_{Umg}, \Delta E_{Einstr}, \Delta t)$ zusammengefasst ist. Dabei kann eine Temperaturänderung der PV-Zellen jedoch nicht nur durch eine Änderung der Umgebungstemperatur $\Delta T_{Umg}$, sondern auch über eine Änderung der Einstrahlung $\Delta E_{Einstr}$ erfolgen. Zum Beispiel führt eine Erhöhung der Einstrahlung zu einer Erhöhung der Temperatur der PV-Zellen, während eine Verringerung der Einstrahlung zu einer Erniedrigung der Temperatur der PV-Zellen führt. Aufgrund der linearen Beziehung zwischen Einstrahlung und Kurzschlussstrom über den zweiten Stromwert $I_{SC,2}$ beziehungsweise das Verhältnis des zweiten Stromwerts und des ihm zugeordneten Referenzstroms gemäß $I_{SC,2}/I_{SC,Ref}$ wird eine einstrahlungsbedingte Temperaturänderung der PV-Zellen über die Bestimmung des zweiten Stromwertes $I_{SC,2}$ während des Verfahrens jedoch prinzipiell überwacht.

Die verschiedenen Mechanismen, die zu einer Temperaturänderung der PV-Zellen führen, weisen jedoch stark unterschiedliche Zeitkonstanten auf. So erfolgt eine Änderung der Umgebungstemperatur $\Delta T_{Umg}$ - und damit auch deren Einfluss auf die Temperaturänderung der PV-Zelle - relativ langsam und weist daher eine große Zeitkonstante (z.B. im Bereich einiger Stunden) auf. Die umgebungsbedingte Temperaturänderung der PV-Zellen kann in dem erfindungsgemäßen Verfahren nach Gleichung Gl. 1a über eine entsprechend angepasste Wiederholrate der Referenzmessungen berücksichtigt werden, so dass eine Änderung der Umgebungstemperatur $\Delta T_{Umg}$ relativ zur letzten Referenzmessung ausgeschlossen, zumindest jedoch vernachlässigt werden kann. Hingegen wird über das Sonnenlicht Strahlungsenergie direkt in die PV-Zelle eingebracht, so dass eine Einstrahlungsänderung $\Delta E_{Einstr}$ zu einer vergleichsweise schnellen Temperaturänderung der PV-Zellen führt. Dennoch reagiert die Temperatur der PV-Zellen mit einer gewissen Trägheit auf die Einstrahlungsänderung $\Delta E_{Einstr}$. Mit anderen Worten: eine Einstrahlungsänderung $\Delta E_{Einstr}$ muss erst eine gewisse Zeit anliegen, bis sich wieder eine neue Gleichgewichtstemperatur der PV-Zelle eingestellt hat, was über die explizite Abhängigkeit der Funktion f von der Zeit $\Delta t$ berücksichtigt wird. Der zweite Stromwert $I_{SC,2}$ selbst bzw. dessen Verhältnis zum zuletzt bestimmten Referenzstrom $I_{SC,Ref}$ kann jedoch als Trigger herangezogen werden, der anzeigt, wann eine erneute Bestimmung des Kurzschluss-Referenzstroms $I_{SC,2}$ erforderlich ist. Dabei können bei einer Abschätzung der maximal möglichen Leistung $P_{max}$ nach Gleichung Gl. 1a zwei unterschiedliche Varianten angewandt werden:

1) Im ersten Fall wird eine maximal tolerierbare Änderung des zweiten Stromwerts $I_{SC,2}$ relativ zum zuletzt ermittelten Referenzstrom $I_{SC,Ref}$ vorgegeben. Dabei ist eine erneute Bestimmung des Referenzstroms dann erforderlich, wenn der detektierte zweite Stromwert $I_{SC,2}$ außerhalb des vorgegebenen Toleranzbereiches um den zuletzt bestimmten Referenzstrom $I_{SC,Ref}$ liegt. Bewegt er sich hingegen innerhalb des vorgegebenen Toleranzbereiches, ist keine erneute Referenzmessung erforderlich. Selbst ein für längere Zeit anliegender Kurzschlussstrom $I_{SC,2}$ führt in diesem Fall zu einer Änderung der Zellentemperatur, die noch als tolerabel anzusehen ist.

2) Im zweiten Fall wird ein gleitender Mittelwert des zweiten Stromwerts $I_{SC,2}$ (oder des Verhältnisses $I_{SC,2} / I_{SC,Ref}$) rückblickend über einen gewissen Zeitraum gebildet. Erst wenn der gleitende Mittelwert des zweiten Stromwerts $I_{SC,2}$ (oder des Verhältnisses $I_{SC,2}/I_{SC,Ref}$) außerhalb eines vordefinierten Toleranzbereiches um den Referenzstromwert $I_{SC,Ref}$ (oder um den Verhältnis-Sollwert 1,00) liegt, ist eine neue Referenzmessung erforderlich. Dabei ist der Zeitraum vorteilhafterweise so gewählt, dass er eine Trägheitsdauer der PV-Zellen berücksichtigt und beispielsweise der Zeit entspricht, die die PV-Zellen benötigen, um sich bei einer schlagartig erfolgenden Einstrahlungsänderung (ggf. bis auf eine vorgegebene Temperaturdifferenz) an eine neue Gleichgewichtstemperatur anzunähern.

Da die Leistungsentnahme zur Bestimmung des zweiten Stromwertes $I_{SC,2}$ und/oder des zweiten Spannungswertes $U_{0,2}$ selbst gering ist, und zudem nur an einem bzw. einzelnen PV-Modulen des PV-Generators erfolgt, ist eine zeitliche Fluktuation der Leistung der PV-Anlage ebenfalls gering und kann sogar bei Abtrennung des PV-Moduls während der Bestimmung ganz verschwinden. Üblicherweise ist das der Koppeleinheit zugeordnete PV-Modul vom gleichen Typ und weist auch die gleiche Einbettung der PV-Zellen auf, wie die restlichen PV-Module des PV-Generators. Daher verhält es sich bei gleichen Umgebungsbedingungen auch so wie die restlichen PV-Module und altert insbesondere auch in gleicher Weise. Somit erübrigen sich sowohl anfängliche Kalibrierungen, wie auch regelmäßige Nachkalibrierungen, wie sie bei Verwendung von Einstrahlungssensoren zur Bestimmung einer maximal möglichen Leistung $P_{max}$ der PV-Anlage notwendig wären. Es erübrigen sich ebenfalls die Kosten zur Anschaffung von separaten Einstrahlungssensoren, da deren Funktion durch das ohnehin vorhandene zumindest eine PV-Modul in Verbindung mit der Koppeleinheit übernommen wird. Dabei kann die Koppeleinheit relativ kostengünstig ausgeführt werden, insbesondere dann, wenn sie als Freischalteinheit des PV-Moduls ausgelegt ist, so dass in Summe immer noch ein Kostenvorteil resultiert. Dies ist insbesondere dann der Fall, wenn entsprechende Freischalteinheiten für PV-Module, beispielsweise aufgrund separater Bestimmungen für PV-Anlagen, ohnehin gefordert sind. Sofern die PV-Module des PV-Generators gleich ausgerichtet und gleichen Umgebungbedingungen unterworfen sind, ist es ausreichend, lediglich ein PV-Modul über eine Koppeleinheit an die restlichen PV-Module des Strings anzubinden. Bei inhomogenen Umgebungsbedingungen innerhalb des PV-Generators bzw. unterschiedlicher Ausrichtung der PV-Module empfiehlt es sich jedoch, mehrere PV-Module mit Koppeleinheiten vorzusehen und diese innerhalb des PV-Generators repräsentativ zu verteilen.

In einer Ausführungsform werden die Referenzwerte über ein Abtasten der IU-Kennlinie - i.e. einen sogenannten Kennlinien-Sweep der IU-Kennlinie - oder über ein sequentielles, zumindest kurzzeitiges Versetzen des der Koppeleinheit zugeordneten PV-Moduls in die entsprechenden Betriebsmodi aus Kurzschluss-, Leerlauf- und MPP-Betriebsmodus erzeugt. Gleiches gilt so auch für die Bestimmung des zweiten Stromwertes $I_{SC,2}$ und des zweiten Spannungswertes $U_{0,2}$. Alternativ dazu kann das PV-Modul zur Bestimmung des zweiten Stromwertes $I_{SC,2}$ und/oder des zweiten Spannungswertes $U_{0,2}$ aber auch über einen längeren Zeitraum in den entsprechenden Betriebsmodi bzw. dem entsprechenden Betriebsmodus betrieben werden. In einer vorteilhaften Ausführungsform des Verfahrens wird das der Koppeleinheit zugeordnete PV-Modul dauerhaft in dem jeweiligen Betriebsmodus aus Kurzschluss- und Leerlauf-Betriebsmodus betrieben, und es wird optional lediglich kurzzeitig in den jeweils anderen Betriebsmodus aus Leerlauf- und Kurzschluss-Betriebsmodus gewechselt.

In einer vorteilhaften Ausführungsform des Verfahrens wird bei einer Bestimmung der Leerlauf-Referenzspannung $U_{0,Ref}$ und/oder des zweiten Spannungswertes $Uo,2$ ein Strom der benachbartem PV-Module über einen Bypasspfad der Koppeleinheit an dem der Koppeleinheit zugeordneten PV-Modul vorbeigeleitet wird. Ein derartiger Bypasspfad kann z.B. über eine Diode oder einen ansteuerbarer Halbleiterschalter der Koppeleinheit gebildet werden, der parallel zu Ausgangsanschlüssen der Koppeleinheit verschaltet ist. Hierdurch wird verhindert, dass dann, wenn das PV-Modul in den leerlaufnahen Betriebsmodus versetzt wird oder von den benachbarten PV-Modulen des Strings abgetrennt wird, auch der Strom im String eine zwingende Abnahme erfährt.

In einer Variante des Verfahrens werden im abgeregelten Zustand der PV-Anlage wiederholt und zu aufeinanderfolgenden Zeiten für das der Koppeleinheit zugeordnete PV-Modul den Kurzschluss-Betriebsmodus kennzeichnende zweite Stromwerte $I_{SC,2}$ und/oder den Leerlauf-Betriebsmodus kennzeichnende zweite Spannungswerte $U_{0,2}$ ermittelt. Dabei wird die aktuell maximal mögliche Leistung $P_{max}$ aus den jeweils zuletzt bestimmten Größen aus zweitem Stromwert $I_{SC,2}$ und/oder zweitem Spannungswert $U_{0,2}$ bestimmt. Bei der Bestimmung werden vorteilhafterweise jeweils auch die zuletzt bestimmten Referenzwerte aus Referenz-MPP-Leistung $P_{MPP,Ref}$, Kurzschluss-Referenzstrom $I_{SC,Ref}$ und/oder Leerlauf-Referenzspannung $U_{0,Ref}$ berücksichtigt. Auf diese Weise wird im abgeregelten Zustand eine zeitliche Änderung der maximal möglichen Leistung $P_{max}$ der PV-Anlage verfolgt.

In einer vorteilhaften Ausführungsform des Verfahrens ist bei der Bestimmung des zweiten Stromwertes $I_{SC,2}$ und/oder des zweiten Spannungswertes $U_{0,2}$ zumindest ein innerhalb einer Verbindungsleitung der Koppeleinheit angeordneter Schalter dauerhaft geöffnet. Über den innerhalb der Verbindungsleitung angeordneten dauerhaft geöffneten Schalter kann das PV-Modul von den benachbarten PV-Modulen des Strings abgetrennt werden. Ein Wechsel von einem Kurzschluss-Betriebsmodus in den Leerlauf-Betriebsmodus des PV-Moduls, wie auch in die andere Richtung kann somit bei abgetrenntem PV-Modul und somit ohne eine dadurch verursachte Leistungsänderung des PV-Generators erfolgen. Ein in dem String fließender durch die benachbarten PV-Module getriebener Strom kann in diesem Fall über den Bypasspfad der Koppeleinheit an dem PV-Modul vorbeifließen.

Prinzipiell kann eine Bestimmung der Referenzwerte auch im abgeregelten Zustand der PV-Anlage erfolgen. Vorteilhafter Weise erfolgt eine Bestimmung der Referenzwerte für das der Koppeleinheit zugeordnete PV-Modul jedoch dann, wenn auch die PV-Anlage bei maximaler Leistung $P_{max}$ betrieben wird. Hierdurch wird verhindert, dass im abgeregelten Zustand der PV-Anlage einzelne Teile der PV-Anlage - wenn auch nur kurzzeitig - in den MPP Zustand versetzt werden. Dabei wird in einer Ausführungsform die Bestimmung der Referenzwerte für das der Koppeleinheit zugeordnete PV-Modul bei einem aktivierten MPP-Tracking des Strings durchgeführt. Die Bestimmung ist daher mit einer Veränderung der Spannung des Strings verbunden. Alternativ dazu kann jedoch auch das MPP Tracking des PV-Generators - welches beispielsweise über den Wechselrichter erfolgt - bei der Bestimmung der Referenzwerte deaktiviert werden. In diesem Fall erfolgt ein Wechsel in den Kurzschluss-Betriebsmodus und/oder in den Leerlauf-Betriebsmodus ohne eine Veränderung der Spannung des Strings.

Um die PV-Anlage auf Anforderung möglichst rasch abregeln und auch wieder aufregeln zu können, wird vorteilhafterweise ein Großteil des PV-Generators in Richtung des Leerlaufs abgeregelt, da dort ein Gradient der Leistungs-Spannungs (PU) - Kennlinie größer ist, als im kurzschlussnahen Bereich der PU-Kennlinie. Daher kann die PV-Anlage rascher und mit größerer Dynamik auf eine Anforderung zur Änderung der eingespeisten Leistung reagieren. Somit werden im abgeregelten Zustand der PV-Anlage diejenigen PV-Module des Strings, denen keine Koppeleinheit zugeordnet ist, in Leerlaufrichtung abgeregelt betrieben. Im Gegensatz dazu ist es vorteilhaft, das der Koppeleinheit zugeordnete PV-Modul - zumindest für den Großteil der Zeit - in den kurzschlussnahen Betriebsmodus zu versetzen. Prinzipiell ist jedoch auch eine Abregelung des PV-Generators in Kurzschlussrichtung möglich, bei der dann das der Koppeleinheit zugeordnete PV-Modul vorteilhafter Weise und zumindest für den Großteil der Zeit im leerlaufnahen Betriebsmodus betrieben wird.

Eine erfindungsgemäße Photovoltaik (PV) - Anlage umfasst:

- einen Photovoltaik (PV) - Generator mit zumindest einem String, der eine Reihenschaltung von PV-Modulen beinhaltet und bei dem zumindest ein PV-Modul über eine Koppeleinheit mit benachbarten PV-Modulen des Strings verbunden ist,
- einen Wechselrichter, der eingangsseitig mit dem PV-Generator und ausgangsseitig mit einem Energieversorgungsnetz (EVN) verbunden ist, und
- eine Steuerung zur Steuerung des Wechselrichters und der Koppeleinheit. Dabei ist die PV-Anlage - insbesondere deren Steuerung - zur Durchführung des erfindungsgemäßen Verfahrens ausgelegt.

Bei der Steuerung der PV-Anlage kann es sich um eine einzelne zentrale Steuerung handeln, sie kann jedoch auch mehrere operativ miteinander verbundene Steuerungseinheiten aufweisen, von denen eine Steuerungseinheit als übergeordnete Steuerung agiert. Dabei können die Steuerungseinheiten unterschiedlichen Komponenten der PV-Anlage zugeordnet und auch innerhalb dieser lokalisiert sein. Beispielsweise kann eine Steuerungseinheit in der Koppeleinheit, eine andere übergeordnete Steuerungseinheit in dem Wechselrichter oder - sofern die PV-Anlage mehrere Wechselrichter aufweist - in einem einer Mehrzahl von Wechselrichtern der PV-Anlage angeordnet sein. Zur Auswertung der Mess- und Betriebsdaten kann die Steuerung eine separate Auswerteeinheit aufweisen. Alternativ dazu kann die Steuerung aber auch selbst als Auswerteeinheit operieren. Es ergeben sich die bereits in Verbindung mit dem Verfahren erwähnten Vorteile.

In einer Ausführungsform der PV-Anlage umfasst die Koppeleinheit

- zwei Eingangsanschlüsse zum Anschluss des ihr zugeordneten PV-Moduls,
- zwei mit den Eingangsanschlüssen über Verbindungsleitungen elektrisch verbundene Ausgangsanschlüsse zum Anschluss an die Reihenschaltung, und
- einen Stromsensor zur Detektion eines Eingangsstroms $I_{ein}$ und/oder einen Spannungssensor zur Detektion einer Eingangsspannung $U_{ein}$. Über den Strom- und den Spannungssensor ist die Koppeleinheit in der Lage, an dem eingangsseitig angeschlossenen PV-Modul den zweiten Stromwert $I_{SC,2}$ als Eingangsstrom $I_{ein}$ bzw. den zweiten Spannungswert $U_{0,2}$ als Eingangsspannung $U_{ein}$ zu bestimmen. Hierzu wird das PV-Modul zuvor oder zum Zeitpunkt der Bestimmung dieser Größen von der Koppeleinheit in Verbindung mit der Steuerung - zumindest kurzzeitig - in den jeweils gewünschten Betriebsmodus versetzt. Zu diesem Zweck weist die Koppeleinheit der PV-Anlage vorteilhafterweise zumindest einen zwischen den Verbindungsleitungen angeordneten und über die Steuerung ansteuerbaren Schalter zum Kurzschließen des an die Koppeleinheit angeschlossenen PV-Moduls auf. Alternativ oder kumulativ dazu weist die Koppeleinheit zumindest einen innerhalb einer der Verbindungsleitungen angeordneten und über die Steuerung ansteuerbaren Schalter auf, der ausgelegt ist, einen Eingangsanschluss mit dem ihm zugeordneten Ausgangsanschluss zu verbinden oder voneinander zu trennen. Prinzipiell können die Schalter durch elektromagnetische Schalter gebildet werden. Vorteilhafterweise werden sie jedoch durch Halbleiterschalter - besonders bevorzugt durch MOSFET's - gebildet.

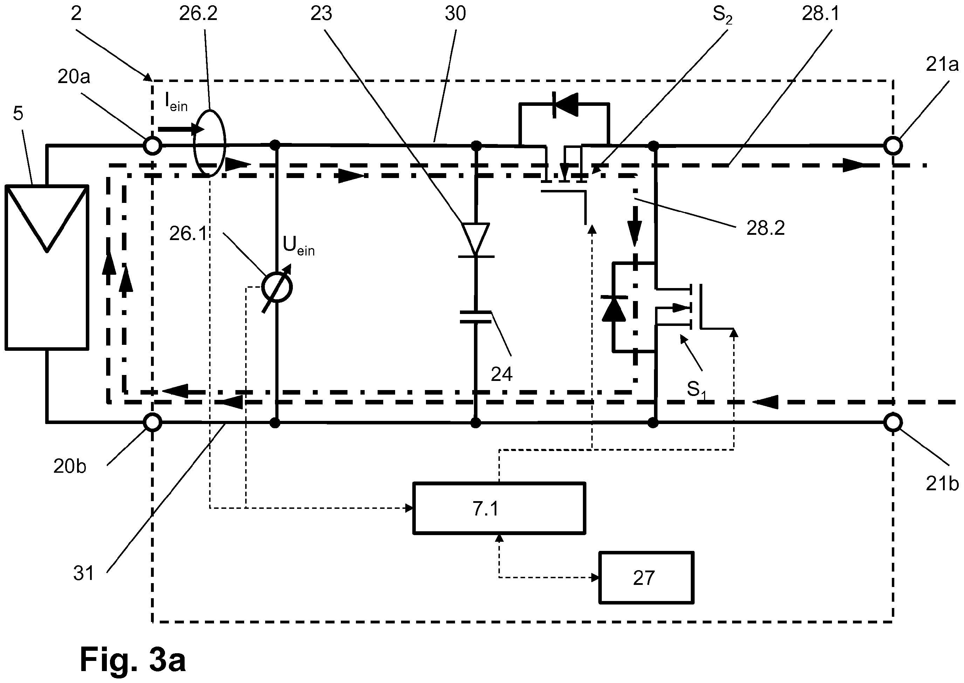

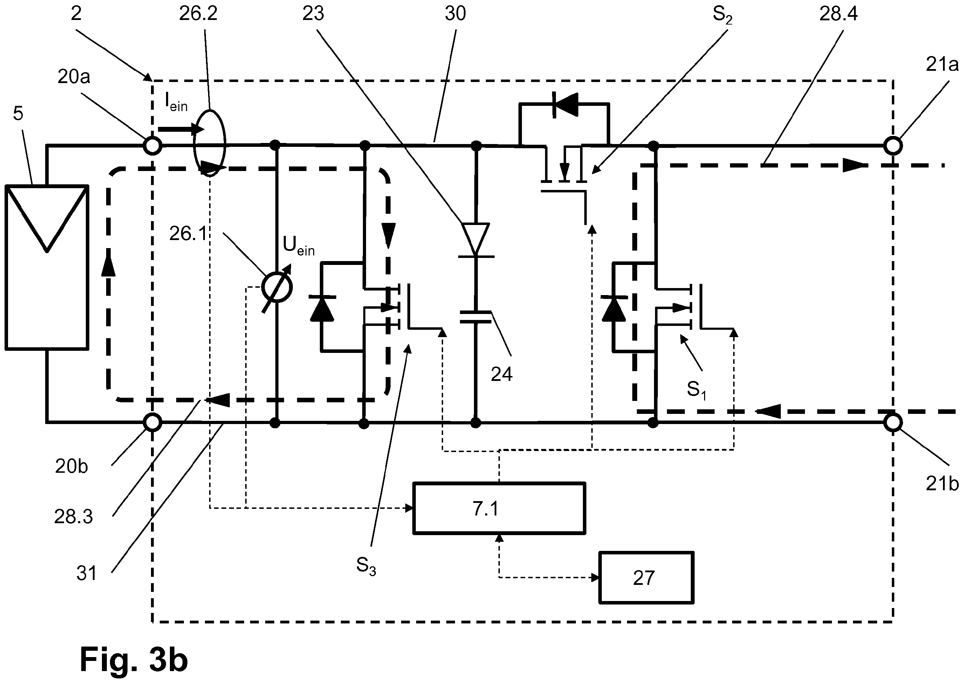

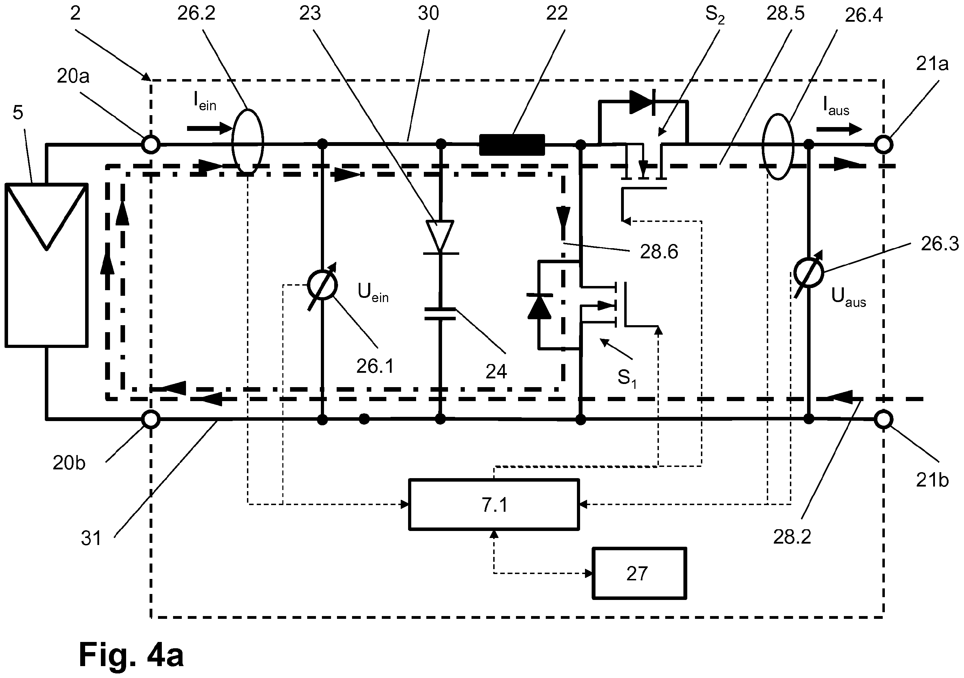

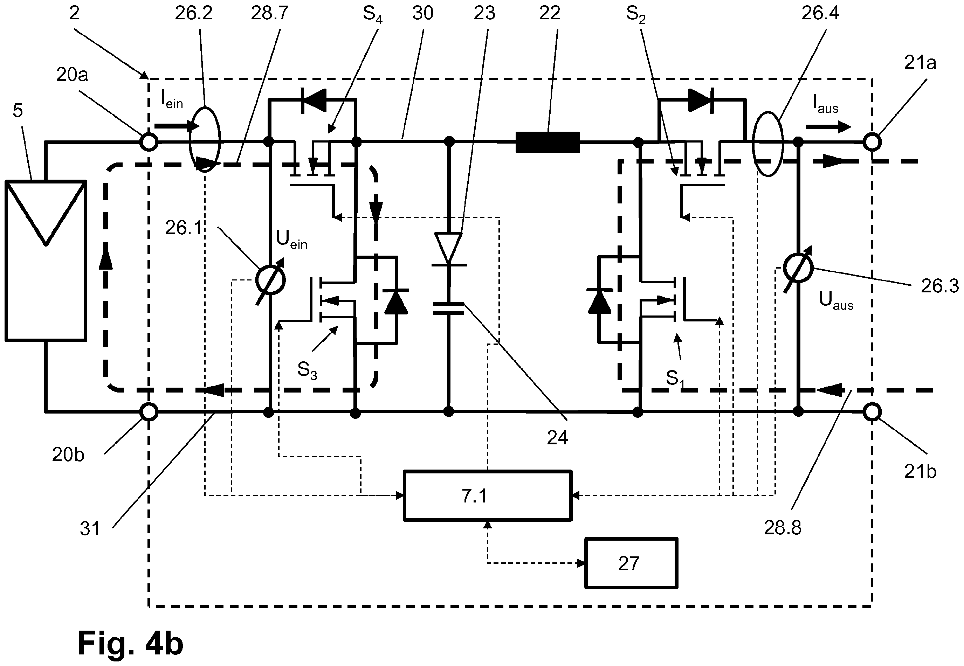

In einer Ausführungsform der PV-Anlage weist die Koppeleinheit einen DC/DC-Wandler, insbesondere einen Hochsetzsteller, einen Tiefsetzsteller, oder einen kombinierten Hoch-Tiefsetzsteller auf. Sie ist somit aufgrund einer Induktivität des DC/DC-Wandlers in der Lage, über eine geeignete Ansteuerung ihrer Schalter eine an den Eingangsanschlüssen anliegende Eingangsspannung $U_{ein}$ in eine an den Ausgangsanschlüssen anliegende Ausgangsspannung $U_{aus}$ zu wandeln. Dabei kann über ein Tastverhältnis der Taktung innerhalb gewisser Grenzen ein beliebiges Wandlungsverhältnis $U_{aus} / U_{ein}$ von Ausgangs- zu Eingangsspannung eingestellt werden. Dies ermöglicht eine fein abgestufte Einstellung der Eingangsspannung $U_{ein}$, wie sie z.B. bei der Durchführung eines Kennlinien-Sweeps der IU-Kennlinie für das der Koppeleinheit zugeordnete PV-Modul erforderlich ist. In einer alternativen Ausführungsform weist die Koppeleinheit eine sogenannte Freischalteinheit für das eingangsseitig angeschlossene PV-Modul auf. Hierbei ist keine DC/DC-Wandlung mit beliebig einstellbarem Wandlungsverhältnis und daher auch keine Induktivität des DC/DC-Wandlers erforderlich. Vielmehr ist die Koppeleinheit als Freischalteinheit insbesondere in der Lage, das ihr zugeordnete PV-Modul durch eine niederimpedante Verbindung der Eingangsanschlüsse miteinander kurzzuschließen, oder durch eine Auftrennung einer ansonsten geschlossenen Verbindung zwischen Eingangsund Ausgangsanschlüssen der Koppeleinheit von den benachbarten PV-Modulen zu trennen. Die Freischaltung kann also über Abtrennung und/oder Kurzschluss erfolgen, weswegen auch die als Freischalteinheit ausgelegte Koppeleinheit das ihr zugeordnete PV-Modul entsprechend in den Kurzschluss- und/oder in den Leerlauf-Betriebsmodus versetzen kann. Für eine DC/DC-Wandlung im eigentlichen Sinne fehlt jedoch die dem DC/DC-Wandler zugeordnete Induktivität. Auch eine Eingangs- und/oder Ausgangskapazität ist für eine Freischalteinheit nicht zwingend erforderlich. Daher ist die als Freischalteinheit ausgelegte Koppeleinheit auch besonders kostengünstig herstellbar. Unabhängig von ihrer Auslegung als DC/DC-Wandler oder aber als Freischalteinheit kann die Koppeleinheit eine Kommunikationseinheit aufweisen. Über die Kommunikationseinheit kann die Koppeleinheit Mess- und Betriebsdaten an eine übergeordnete Steuerung kommunizieren. Gleichfalls kann auch eine der Koppeleinheit zugeordnete Steuerungseinheit Befehle und/oder Anweisungen einer übergeordneten Steuerung, beispielsweise einer in einem Wechselrichter angeordneten übergeordneten Steuerung, empfangen. Besonders bevorzugte Beispiele für eine als Freischalteinheit ausgelegte Koppeleinheit werden in den Fig. 3a und 3b erläutert, während die Fig. 4a und 4b Varianten einer als DC/DC-Wandler ausgelegten Koppeleinheit illustrieren.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt eine Ausführungsform einer erfindungsgemäßen Photovoltaik (PV) - Anlage zur Durchführung des erfindungsgemäßen Verfahrens; und

Fig. 2     zeigt ein Flussdiagramm des erfindungsgemäßen Verfahrens

Fig. 3a    zeigt eine erste Ausführungsform einer Koppeleinheit für ein Photovoltaik (PV) - Modul zur Durchführung des Verfahrens

Fig. 3b    zeigt eine zweite Ausführungsform einer Koppeleinheit für ein PV-Modul zur Durchführung des Verfahrens

Fig. 4a    zeigt eine dritte Ausführungsform einer Koppeleinheit für ein PV-Modul zur Durchführung des Verfahrens

Fig. 4b    zeigt eine vierte Ausführungsform einer Koppeleinheit für ein PV-Modul zur Durchführung des Verfahrens

## FIGURENBESCHREIBUNG

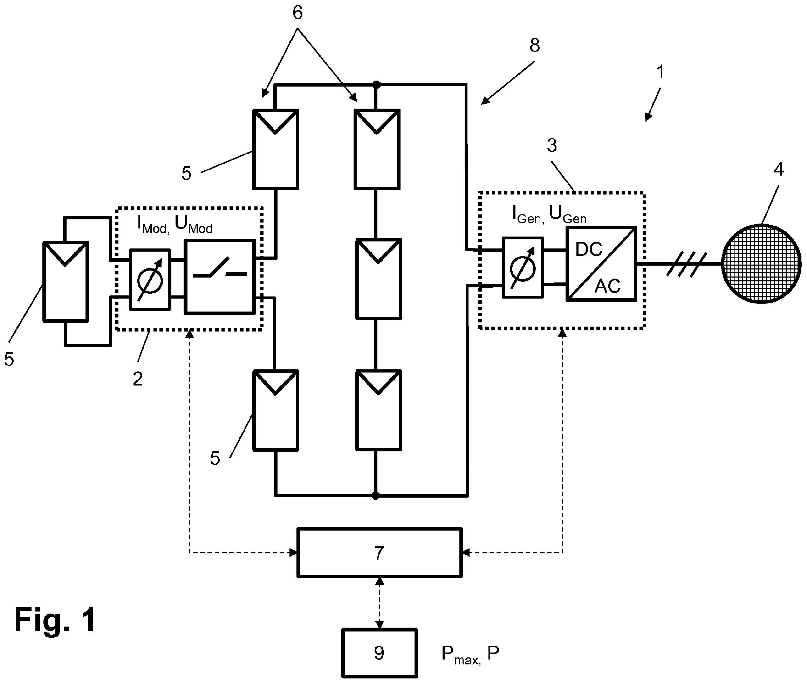

In **Fig. 1** ist eine Ausführungsform einer Photovoltaik (PV) - Anlage 1 zur Durchführung des erfindungsgemäßen Verfahrens dargestellt. Die PV-Anlage 1 umfasst einen dreiphasigen Wechselrichter 3 der ausgangsseitig an ein Energieversorgungsnetz (EVN) 4 angeschlossen ist. An einen DC-Eingang des Wechselrichters 3 ist ein PV-Generator 8 in Form zweier parallel zueinander geschalteter Strings 6 angeschlossen. Jeder String 6 weist eine Reihenschaltung von mehreren (hier: exemplarisch drei) PV-Modulen 5 auf. Bei einem String 6 ist eines der PV-Module 5 über eine Koppeleinheit 2 an die benachbarten PV-Module 5 des Strings 6 angeschlossen. Sowohl der Wechselrichter 3 als auch die Koppeleinheit 2 werden über eine zentrale Steuerung 7 gesteuert. Die Steuerung 7 ist dazu eingerichtet, Mess- und Betriebsdaten der Koppeleinheit 2

-     beispielsweise Strom $I_{Mod}$, Spannung $U_{Mod}$ des zugeordneten PV-Moduls 5 - und des Wechselrichters 3 - z.B. Strom $I_{Gen}$, Spannung $U_{Gen}$ des PV-Generators 8 - über geeignete Sensoren des Wechselrichters 3 bzw. der Koppeleinheit 2 (in Fig. 1 jeweils über ein Messgerätesymbol schematisch dargestellt) zu ermitteln. Die Mess- und Betriebsdaten werden von einer mit der Steuerung 7 operativ verbundenen Auswerteeinheit 9 analysiert und ausgewertet. Weiterhin ist die Steuerung 7 ausgelegt, den Betrieb der Koppeleinheit 2 wie auch des Wechselrichters 3 in Abhängigkeit der ausgewerteten Mess- und Betriebsdaten zu steuern. Die operative und ggf. kommunikative Verbindung der Steuerung 7 mit der Koppeleinheit 2, dem Wechselrichter 3 und der Auswerteeinheit 9 ist in Fig. 1 schematisch durch die gestrichelten Linien dargestellt.

Im Betrieb der PV-Anlage 1 ermittelt die Steuerung 7 zu aufeinanderfolgenden Zeitpunkten Strom $I_{Gen}$ und Spannung $U_{Gen}$ des PV-Generators 8 als Mess- und Betriebsdaten des Wechselrichters 3. Zusätzlich ermittelt die Steuerung 7 Strom $I_{Mod}$ und Spannung $U_{Mod}$ als entsprechende elektrische Mess- und Betriebsdaten des ausgewählten PV-Moduls 5, das über die Koppeleinheit 2 mit den benachbarten PV-Modulen 5 des Strings 6 verbunden ist. Die mit der Steuerung 7 verbundene Auswerteeinheit 9 berechnet hieraus eine dem PV-Generator 8 entnommene elektrische Leistung $P_{Gen} = I_{Gen} * U_{Gen}$, die bis auf Umwandlungsverluste im Wechselrichter 3 der in das EVN 4 eingespeisten elektrischen Leistung P der PV-Anlage 1 entspricht. In entsprechender Weise wird aus den Mess- und Betriebsdaten $I_{Mod}$, $U_{Mod}$ des PV - Moduls 5 gemäß $P_{Mod} = U_{Mod} * I_{Mod}$ eine dem PV-Modul 5 entnommene elektrische Leistung $P_{Mod}$ berechnet. Zu bestimmten Zeiten wird das an die Koppeleinheit 2 angeschlossene PV-Modul 5 über die Steuerung 7 zumindest kurzzeitig in einen kurzschlussnahen und/oder einen leerlaufnahen Betriebsmodus versetzt, bei denen von der Steuerung 7 ein den Kurzschluss-Betriebsmodus kennzeichnender zweiter Stromwert $I_{SC,2}$ bzw. ein den Leerlauf-Betriebsmodus kennzeichnender zweiter Spannungswert $U_{0,2}$ als Mess- und Betriebsdaten des der Koppeleinheit 2 zugeordneten PV Moduls 5 ermittelt werden. Über den zweiten Stromwert $I_{SC,2}$ und/oder den zweiten Spannungswert

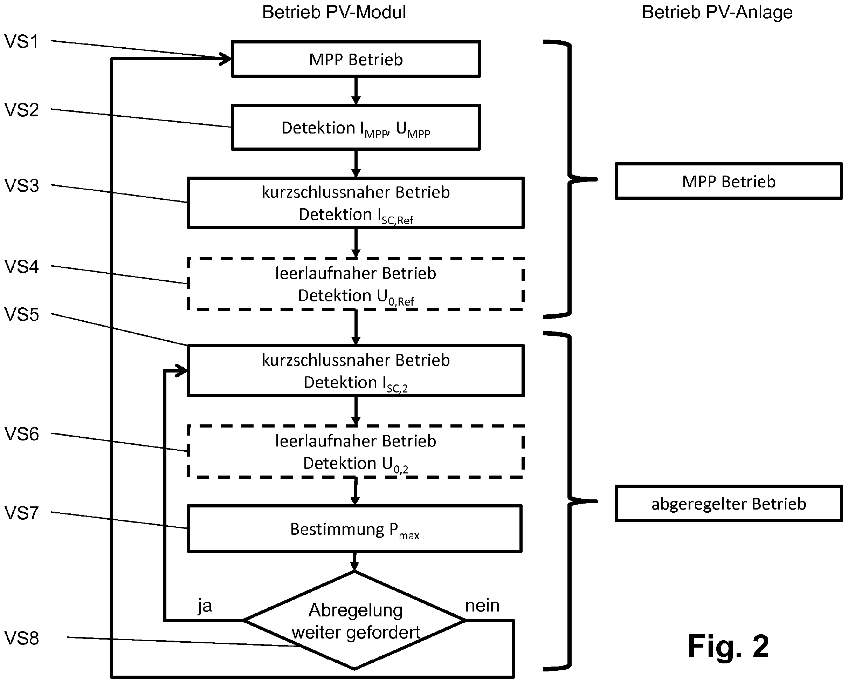

$U_{0,2}$ in Verbindung mit zuvor bestimmten Referenzwerten des PV-Moduls 5 wird von der Auswerteeinheit 9 eine maximal mögliche Leistung des PV-Moduls 5 - und darüber eine maximal mögliche Leistung $P_{max}$ des PV-Generators 8 bzw. der PV-Anlage 1 - im abgeregelten Zustand der PV-Anlage 1 bestimmt und der Steuerung 7 übermittelt. Die Steuerung 7 justiert unter Berücksichtigung der maximal möglichen Leistung $P_{max}$ gegebenenfalls eine in das EVN 4 eingespeiste reduzierte elektrische Leistung P nach, um die PV-Anlage 1 auf einen definierten Prozentsatz der maximal möglichen Leistung $P_{max}$ abzuregeln. Das Verfahren wird detailliert in Verbindung mit dem Flussdiagramm in Fig. 2 erläutert.

In Fig. 1 ist exemplarisch ein dreiphasiger Wechselrichter 3 dargestellt. Die erfindungsgemäße PV-Anlage 1 kann jedoch auch einen Wechselrichter 3 aufweisen, dessen Ausgang mit einer anderen Anzahl an Phasenleitern -beispielsweise mit lediglich einem Phasenleiter - mit dem EVN 4 verbunden ist. Bei dem dargestellten Wechselrichter 3 handelt es sich um einen einstufigen Wechselrichter. Alternativ kann der Wechselrichter jedoch auch mehrstufig ausgebildet sein und beispielsweise einen dem DC/AC-Wandler vorgeschalteten DC/DC-Wandler umfassen. Weiterhin kann die PV-Anlage 1 alternativ auch mehrere Koppeleinheiten 2 aufweisen, über die jeweils ein PV-Modul 5 an benachbarte PV-Module 5 des entsprechenden Strings 6 angebunden ist. Die Anzahl der Koppeleinheiten 2 ist abhängig davon, wie homogen eine Einstrahlung über den gesamten PV-Generator 8 verteilt ist.

**Fig. 2** zeigt ein Flussdiagramm des erfindungsgemäßen Verfahrens am Beispiel der PV-Anlage 1 aus Fig. 1. Dabei befindet sich die PV-Anlage 1 - abgesehen von dem der Koppeleinheit 2 zugeordneten PV-Modul 5 - während der Verfahrensschritte VS1 - VS4 durchgängig in einem MPP-Betrieb, bei dem eine maximal mögliche Leistung $P_{max}$ der PV-Anlage 1 in das EVN 4 eingespeist wird. Während der Schritte VS5 - VS8 wird die PV-Anlage 1, beispielsweise aufgrund einer externen Anforderung - abgeregelt betrieben. Hier wird lediglich eine gegenüber der maximal möglichen Leistung $P_{max}$ reduzierte Leistung P der PV-Anlage 1 in das EVN 4 eingespeist.

In einem ersten Schritt VS1 wird zunächst das der Koppeleinheit 2 zugeordnete PV-Modul 5 über die Steuerung 7 in einen MPP-Betriebsmodus versetzt, sofern es sich nicht ohnehin schon in dem MPP-Betriebsmodus befindet. In einem zweiten Schritt VS2 werden den MPP- Betriebsmodus charakterisierende Werte von Strom $I_{MPP}$ und Spannung UMPP bestimmt und hieraus eine Referenz-MPP-Leistung $P_{MPP,Ref}$ des PV-Moduls 5 berechnet. Zeitnah zum Schritt VS2 wird in einem Schritt VS3 das PV-Modul 5 zumindest kurzzeitig in einen kurzschlussnahen Betriebsmodus versetzt und ein den Kurzschluss-Betriebsmodus kennzeichnender Kurzschluss-Referenzstrom $I_{SC,Ref}$ bestimmt. Es folgt nun ebenfalls zeitnah zu dem dritten VS3 und dem zweiten Schritt VS2 ein optionaler vierter Schritt VS4, bei dem das PV-Modul 5 zumindest kurzzeitig in einen leerlaufnahen Betriebsmodus versetzt wird. Dort wird von der Steuerung 7 in Verbindung mit den entsprechenden Sensoren in der Koppeleinheit 2 eine Leerlauf-Referenzspannung $U_{0,Ref}$ des PV-Moduls 5 bestimmt. Die in den Schritten VS1 - VS4 bestimmten Referenzwerte aus Referenz-MPP-Leistung $P_{MPP}$, Kurzschluss-Referenzstrom $I_{SC,Ref}$ und Leerlauf-Referenzspannung $U_{0,Ref}$ des PV-Moduls 5 werden in der Steuerung 7 oder in der Auswerteeinheit 9 zur weiteren Nutzung abgespeichert.

Zwischen dem vierten VS4 und dem fünften Schritt VS5 wird die PV-Anlage 1 - beispielsweise durch eine Anforderung eines Energieversorgers, in dessen EVN 4 die PV-Anlage 1 einspeist - in einen abgeregelten Betrieb versetzt. Hierbei soll die PV-Anlage 1 lediglich einen definierten Prozentsatz - z.B. 70% - ihrer maximal möglichen Leistung $P_{max}$ in das EVN 4 einspeisen. Zur Ermittlung der maximal möglichen Leistung $P_{max}$ wird in einem fünften Schritt VS5 das der Koppeleinheit 2 zugeordnete PV-Modul 5 zumindest kurzzeitig - optional aber auch über einen gewissen Zeitraum dauerhaft - in einen kurzschlussnahen Betriebsmodus versetzt, und dort ein den Kurzschluss-Betriebsmodus kennzeichnender zweiter Stromwert $I_{SC,2}$ bestimmt. Optional wird in einem zeitnah auf den fünften VS5 folgenden sechsten Schritt VS6 noch ein zweiter Spannungswert $U_{0,2}$ bestimmt, indem das der Koppeleinheit 2 zugeordnete PV-Modul 5 zumindest kurzzeitig - optional aber auch über einen gewissen Zeitraum dauerhaft - in einen leerlaufnahen Betriebsmodus versetzt wird. Schließlich wird in einem siebten Schritt VS7 unter Berücksichtigung des zweiten Stromwertes $I_{SC,2}$ und gegebenenfalls des zweiten Spannungswertes $U_{0,2}$, sowie der in den Schritten VS1 bis VS4 ermittelten Referenzwerte aus Referenz-MPP-Leistung $P_{MPP}$, Kurzschluss-Referenzstrom $I_{SC,Ref}$ und Leerlauf-Referenzspannung $U_{0,Ref}$ über die Auswerteeinheit 9 eine aktuell maximal mögliche Leistung $P_{max}$ der PV-Anlage 1 ermittelt. Aus diesem Wert wird von der Auswerteeinheit 9 unter Berücksichtigung der Abregelungs-Anforderung eine reduzierte Leistung P der PV-Anlage 1 bestimmt, die erlaubterweise in das EVN 4 eingespeist werden kann. Die reduzierte Leistung P, gegebenenfalls auch die maximal mögliche Leistung $P_{max}$, werden der Steuerung 7 übermittelt, die danach den Wechselrichter 3 derart ansteuert, dass die zuletzt bestimmte reduzierte Leistung P der PV-Anlage 1 in das EVN 4 eingespeist wird. Im nächsten Schritt VS8 wird überprüft, ob auch weiterhin eine Abregelung der PV-Anlage 1 gefordert ist. Ist dies der Fall, so springt das Verfahren zum fünften Schritt VS5 zurück, bei dem - gegebenenfalls nach einer kurzen Wartezeit - das PV-Modul 5 erneut zumindest kurzzeitig in den kurzschlussnahen Betriebsmodus versetzt wird, bei dem dann erneut ein zweiter Stromwert $I_{SC,2}$ bestimmt wird. Besteht im Schritt VS8 keine Anforderung zur Abregelung mehr, so springt das Verfahren zum Schritt VS1, bei dem die PV-Anlage 1 wie auch das ausgewählte PV-Modul 5 in den MPP-Betriebsmodus versetzt werden.

Es liegt im Rahmen der Erfindung, die Referenzwerte fortlaufend abzuspeichern und die aktuell bestimmten mit bereits vorher bestimmten Referenzwerten zu vergleichen. Aus dem Vergleich kann ermittelt werden, ob sich das betreffende PV-Modul 5 - beispielsweise aufgrund einer schleichend einsetzenden potential-induzierten Degradation oder einer sonstigen Schädigung - verändert hat. In einem derartigen Fall kann die PV-Anlage 1 dies dem Betreiber entsprechend signalisieren.

In **Fig. 3a** ist eine erste Ausführungsform der Koppeleinheit 2 in Form einer Freischalteinrichtung für das zugeordnete PV-Modul 5 dargestellt. Die Koppeleinheit 2 weist einen Eingang mit zwei Eingangsanschlüssen 20a, 20b zum Anschluss des PV-Moduls 5 und einen Ausgang mit zwei Ausgangsanschlüssen 21a, 21b zum Anschluss der benachbarten PV-Module 5 des Strings 6 auf. Jeder der Eingangsanschlüsse 20a, 20b ist jeweils über eine Verbindungsleitung 30, 31 mit einem ihm zugeordneten Ausgangsanschluss 21a, 21b verbunden. Innerhalb einer der Verbindungsleitungen 30, 31 (hier: der Verbindungsleitung 30) ist ein zweiter Schalter $S_2$ - hier ein MOSFET - angeordnet. Ein erster Schalter $S_1$ ist parallel zu den Ausgangsanschlüssen 21a, 21b angeordnet und verbindet dort die Verbindungsleitungen 31, 31 miteinander. Beide Schalter werden über eine Steuerungseinheit 7.1 angesteuert. Die Steuerungseinheit 7.1 ist mit einem Spannungssensor 26.1 zur Erfassung einer Eingangsspannung $U_{ein}$ und einem Stromsensor 26.2 zur Erfassung eines Eingangsstroms $I_{ein}$ verbunden, was in Fig. 3a über gestrichelte Linien illustriert ist. Die Steuerungseinheit 7.1 ist weiterhin über eine Kommunikationseinheit 27 mit einer hier nicht dargestellten übergeordneten Steuerung 7 der PV-Anlage 1 verbunden. Über die Kommunikationseinheit 27 können sowohl Meß- und Betriebsdaten der Koppeleinheit 2 an die übergeordnete Steuerung 7 übermittelt, wie auch Informationen und Befehle von der übergeordneten Steuerung 7 empfangen werden. Die Koppeleinheit 2 weist weiterhin eine Reihenschaltung einer Diode 23 und eines Energiespeichers 24 (hier: eines Kondensators) auf, die zwischen den Verbindungsleitungen 30, 31 angeordnet ist. Dabei dient der Energiespeicher 24 zur Versorgung der Steuerungseinheit 7.1 und gegebenenfalls weiterer Komponenten der Koppeleinheit 2.

Im normalen Betrieb der PV-Anlage 1 - beispielsweise in deren MPP Betrieb - ist der erste Schalter $S_1$ geöffnet und der zweite Schalter $S_2$ geschlossen. In diesem Fall wird die dem eingangsseitig angeschlossenen PV-Modul 5 entnommene Leistung an den Ausgang der Koppeleinheit 2 übertragen. Alternativ dazu kann die Steuerungseinheit 7.1 der Koppeleinheit 2 jedoch über ein Schließen des ersten Schalters $S_1$ und des zweiten Schalters $S_2$ das zugeordnete PV-Modul 5 in einen Kurzschluss-Betriebsmodus versetzen und über den Stromsensor 26.2 als Eingangsstrom $I_{ein}$ einen den Kurzschluss-Betriebsmodus kennzeichnenden zweiten Stromwert $I_{SC,2}$ ermitteln. Zusätzlich ist die Steuerungseinheit 7.1 in der Lage, bei geschlossenem ersten Schalter $S_1$ und geöffnetem zweiten Schalter $S_2$ das PV-Modul 5 in einen Leerlauf-Betriebsmodus zu versetzen und dort als Eingangsspannung $U_{ein}$ der Koppeleinheit 2 einen den Leerlauf-Betriebsmodus kennzeichnenden zweiten Spannungswert $U_{0,2}$ zu bestimmen. Solange das PV-Modul 5 über die Koppeleinheit 2 in dem Kurzschluss- oder in dem Leerlauf-Betriebsmodus betrieben wird, wird keine Leistung vom Eingang an den Ausgang der Koppeleinheit 2 transferiert. Eine Entnahme einer verwertbaren Leistung - beispielsweise einer in das EVN 4 einspeisbaren Leistung - des PV-Moduls 5 ist in diesen Betriebsmodi unterdrückt. In Fig. 3a sind Strompfade 28.1, 28.2 innerhalb der Koppeleinheit 2 für den normalen Betrieb (28.1) und für den Kurzschluss-Betriebsmodus (28.2) in unterschiedlicher Linienart illustriert.

In **Fig. 3b** ist eine zweite Ausführungsform der Koppeleinheit 2 - auch hier in Form einer Freischalteinrichtung des zugeordneten PV Moduls 5 - dargestellt. Die zweite Ausführungsform entspricht im Wesentlichen der ersten Ausführungsform aus Fig. 3a, weswegen für die gleichartigen Punkte auf die dortige Beschreibung verwiesen wird und im Folgenden nur die Unterschiede zur ersten Ausführungsform erläutert werden.

Zusätzlich zur ersten Ausführungsform weist die Koppeleinheit 2 gemäß Fig. 3b einen dritten Schalter $S_3$ - ebenfalls in Form eines MOSFET - parallel zum Eingang der Koppeleinheit 2 auf. Auch der dritte Schalter $S_3$ ist über die Steuerungseinheit 7.1 ansteuerbar. Dabei ist die Koppeleinheit 2 ausgelegt, das ihr zugeordnete PV-Modul 5 durch Öffnen des zweiten Schalters $S_2$ von den benachbarten PV-Modulen 5 des Strings 6 abzutrennen. Dabei kann zusätzlich ein Schließen des ersten Schalters $S_1$ erfolgen. In diesem Fall fließt der Strom der benachbarten PV-Module 5 über den geschlossenen ersten Schalter $S_1$ an dem eingangsseitig angeschlossenen PV-Modul 5 der Koppeleinheit 2 vorbei, was in Fig. 3b über den Strompfad 28.4 dargestellt ist. In diesem Zustand - also bei geschlossenem ersten Schalter $S_1$ und geöffnetem zweiten Schalter $S_2$ - und somit quasi bei abgetrenntem der Koppeleinheit 2 zugeordnetem PV-Modul 5 - ist die Steuerungseinheit 7.1 in der Lage, das PV-Modul 5 bei geschlossenen dritten Schalter $S_3$ in einen Kurzschluss-Betriebsmodus (illustriert über den Strompfad 28.3), und bei geöffnetem dritten Schalter $S_3$ in einen Leerlauf-Betriebsmodus zu versetzen. Die Steuerungseinheit 7.1 ist eingerichtet, in den jeweiligen Betriebsmodi einen zweiten Stromwert $I_{SC,2}$ bzw. einen zweiten Spannungswert $U_{0,2}$ zu ermitteln und als Meß- und Betriebsparameter über die angeschlossene Kommunikationseinheit 27 der übergeordneten Steuerung 7 zu übermitteln.

In **Fig. 4a** ist eine dritte Ausführungsform der Koppeleinheit 2 in Form eines DC/DC-Wandlers, insbesondere eines Hochsetzstellers, dargestellt. Auch die dritte Ausführungsform ähnelt in einigen Aspekten der Ausführungsform gemäß Fig. 3a, weswegen hierzu ebenfalls auf die dortige Beschreibung verwiesen wird. Im Folgenden werden hauptsächlich die Unterschiede zu der Ausführungsform gemäß Fig. 3a erläutert.

Gemäß Fig. 4a weist die Koppeleinheit eine Induktivität 22 innerhalb der Verbindungsleitung 30 und in Reihe zu dem dort angeordneten zweiten Schalter $S_2$ auf. Der erste Schalter $S_1$ ist zwischen den Verbindungsleitungen 30, 31 angeordnet und verbindet dort die eine Verbindungsleitung 31 mit einem Mittelpunkt der Reihenschaltung aus Induktivität 22 und zweitem Schalter $S_2$ innerhalb der anderen Verbindungsleitung 30. Die Koppeleinheit 2 weist weiterhin einen weiteren Stromsensor 26.4 zur Detektion eines Ausgangsstroms $I_{aus}$ und einen weiteren Spannungssensor 26.3 zur Detektion einer Ausgangsspannung $U_{aus}$ auf. Der weitere Stromsensor 26.4 und der weitere Spannungssensor 26.3 sind operativ mit der Steuerungseinheit 7.1 verbunden. Die Steuerungseinheit 7.1 ist ausgelegt, den ersten $S_1$ und den zweiten Schalter $S_2$ derart zu takten, dass eine an den Eingangsanschlüssen 20a, 20b anliegende Eingangsspannung $U_{ein}$ in eine an den Ausgangsanschlüssen 21a, 21b anliegende Ausgangsspannung $U_{aus}$ mit $U_{ein} < U_{aus}$ und einem vordefinierten Wandlungsverhältnis $U_{aus} / U_{ein}$ gewandelt wird. Die resultierenden Strompfade 28.5, 28.6 bei geöffnetem (28.5) und geschlossenem ersten Schalter $S_1$ (28.6) sind in unterschiedlich gestrichelter Form innerhalb der Koppeleinheit 2 skizziert.

Aufgrund der Auslegung als Hochsetzsteller ist die Koppeleinheit 2 in der Lage, das eingangsseitig angeschlossenen PV-Modul 5 weitestgehend unabhängig von den benachbart angeschlossenen PV-Modulen 5 des Strings 6 zumindest kurzzeitig in einen kurzschlussnahen Betriebsmodus zu versetzen. Dies ist beispielsweise bei einem zeitlich vorwiegend geschlossenem ersten Schalters $S_1$ der Fall. Über den Stromsensor 26.2 ist die Steuerungseinheit 7.1 dabei in der Lage, den den Kurzschluss-Betriebsmodus kennzeichnenden zweiten Stromwert $I_{SC,2}$ zu ermitteln.

In **Fig. 4b** ist eine vierte Ausführungsform der Koppeleinheit 2 in Form eines kombinierten Hoch-Tiefsetz-Stellers als DC/DC-Wandler dargestellt. Zusätzlich zu der dritten Ausführungsform gemäß Fig. 4a weist die vierte Ausführungsform nach Fig. 4b weitere Schalter, nämlich einen dritten $S_3$ und einen vierten Schalter $S_4$ auf. Der vierte Schalter $S_4$ ist innerhalb der Verbindungsleitung 30 in Reihe zu der Induktivität 22 und dem zweiten Schalter $S_2$ geschaltet und zwischen dem ersten Eingangsanschluss 20a und der Induktivität 22 angeordnet. Der dritte Schalter $S_3$ verbindet die eine Verbindungsleitung 30 mit der anderen Verbindungsleitung 31, wobei ein Anschluss des dritten Schalters $S_3$ zu der einen Verbindungsleitung 30 zwischen dem vierten Schalter $S_4$ und der Induktivität 22 angeordnet ist. Sowohl der dritte Schalter S3 als auch der vierte Schalter $S_4$ sind über die Steuerungseinheit 7.1 ansteuerbar.

Als kombinierter Hoch-Tiefsetz-Steller ist die Koppeleinheit 2 ausgelegt, eine an den Eingangsanschlüssen 20a, 20b anliegende Eingangsspannung $U_{ein}$ in eine an den Ausgangsanschlüssen 21a, 21b anliegende Ausgangsspannung $U_{aus}$ zu wandeln. Die Ausgangsspannung $U_{aus}$ kann dabei größer, d.h. $U_{aus} > U_{ein}$, oder auch kleiner als die Eingangsspannung sein, d.h. $U_{aus} < U_{ein}$. Über eine entsprechende Ansteuerung der Schalter $S_1$ bis $S_4$ kann die Steuerungseinheit 7.1 sowohl kurzzeitig als auch dauerhaft einen kurzschlussnahen Betriebsmodus des PV-Moduls 5 herbeiführen und dabei über den Stromsensor 26.2 den diesen Betriebsmodus kennzeichnenden zweiten Stromwert $I_{SC,2}$ ermitteln. Ein den kurzschlussnahen Betriebsmodus kennzeichnender Strompfad 28.7 ist schematisch innerhalb der Koppeleinheit 2 dargestellt. Über eine entsprechend andere Ansteuerung der Schalter $S_1$ bis $S_4$ kann die Steuerungseinheit 7.1 sowohl kurzzeitig als auch dauerhaft einen leerlaufnahen Betriebsmodus des PV-Moduls 5 herbeiführen, und bei diesem dann über den Spannungssensor 26.1 den den Leerlauf-Betriebsmodus kennzeichnenden zweiten Spannungswert $U_{0,2}$ ermitteln. Dabei wird ein in dem String 6 fließender durch die benachbarten PV-Module getriebener Strom über die Ausgangsanschlüsse 21a, 21b an dem der Koppeleinheit 2 zugeordneten PV-Modul 5 vorbeigeführt, was durch den Strompfad 28.8 illustriert ist. Über die Kommunikationseinheit 27 können diese Werte als Meß- und Betriebsdaten einer übergeordneten Steuerung 7 übermittelt werden.

**BEZUGSZEICHENLISTE**

| | | |
|---|---|---|
| 1 | | Photovoltaik (PV) - Anlage |
| 2 | | Koppeleinheit |
| 3 | | Wechsel richter |
| 4 | | Netz |
| 5 | | Photovoltaik (PV) - Modul |
| 6 | | String |
| 7, 7.1 | | Steuerung |
| 8 | | Photovoltaik (PV) - Generator |
| 9 | | Auswerteeinheit |
| | | |
| 20a, 20b | | Eingangsanschluss |
| 21a, 21b | | Ausgangsanschluss |

(fortgesetzt)

| | | |
|---|---|---|
| 22 | | Induktivität |
| 23 | | Diode |
| 24 | | Kondensator |
| | | |
| 26.1, 26.3 | | Stromsensor |
| 26.2, 26.4 | | Spannungssensor |
| 27.1, 27.2 | | Kommunikationseinheit |
| 28.1 - 28.8 | | Strom pfad |
| 30, 31 | | Verbindungsleitung |
| $I_{sC,Ref}$ | | Referenzstrom |
| $U_{0,Ref}$ | | Referenzspannung |
| $P_{MPP,Ref}$ | | Referenz-M PP- Leistung |
| $I_{SC,2}$, $I_{ein}$, $I_{Mod}$, $I_{Gen}$ | | Strom |
| $U_{0,2}$, $U_{ein}$, $U_{Mod}$, $U_{Gen}$ | | Spannung |
| $P_{Mod}$, $P_{Gen}$ | | Leistung |
| $S_1$, $S_2$, $S_3$, $S_4$ | | Schalter |
| VS1 - VS8 | | Verfahrensschritt |

**Patentansprüche**

1. Verfahren zur Bestimmung einer aktuell maximal möglichen Leistung ($P_{max}$) einer abgeregelt betriebenen Photovoltaik, PV, - Anlage (1) umfassend einen mindestens einen String (6) aufweisenden PV-Generator (8), wobei der mindestens eine String (6) eine Reihenschaltung von PV-Modulen (5) umfasst, bei der zumindest ein PV-Modul (5) über eine Koppeleinheit (2) mit benachbarten PV-Modulen (5) des Strings (6) verbunden ist, einen Wechselrichter (3), der ausgangsseitig mit einem Energieversorgungsnetz (4) und eingangsseitig mit dem PV-Generator (8) verbunden ist, eine Steuerung (7, 7.1) zur Steuerung des Wechselrichters (3) und der Koppeleinheit (2), wobei die Steuerung (7, 7.1) in Verbindung mit der Koppeleinheit (2) ausgelegt ist, während eines Betriebs der PV-Anlage (1) eine Leistungsentnahme des ihr zugeordneten PV-Moduls (5) relativ zu einer Leistungsentnahme der benachbarten PV-Module (5) zu variieren, mit den Schritten:

    - Bestimmung von Referenzwerten für das der Koppeleinheit (2) zugeordnete PV-Modul (5) umfassend eine Referenz-MPP-Leistung ($P_{MPP,Ref}$) und zumindest eines der Referenz-MPP-Leistung ($P_{MPP,Ref}$) zugeordneten Wertes aus Kurzschluss-Referenzstrom ($I_{SC,Ref}$) und/oder Leerlauf-Referenzspannung ($U_{0,Ref}$),
    - Betreiben der PV-Anlage (1) in Reaktion auf ein Abregelungssignal in einem abgeregelten Zustand mit einer gegenüber der aktuell maximal möglichen Leistung ($P_{max}$) der PV-Anlage (1) geringeren Leistung (P), **dadurch gekennzeichnet, dass**
    - im abgeregelten Zustand der PV-Anlage (1) für das der Koppeleinheit (2) zugeordnete PV-Modul (5)

        - ein einen Kurzschluss-Betriebsmodus kennzeichnender zweiter Stromwert ($I_{SC, 2}$) bestimmt wird, und/oder
        - ein einen Leerlauf-Betriebsmodus kennzeichnender zweiter Spannungswert ($U_{0,2}$) bestimmt wird, und

    - wobei die aktuell maximal mögliche Leistung ($P_{max}$) im abgeregelten Zustand der PV-Anlage (1) aus

        - dem zweiten Stromwert ($I_{SC,2}$), dem Kurzschluss-Referenzstrom ($I_{SC,Ref}$) und der Referenz-MPP-Leistung ($P_{MPP,Ref}$), oder
        - dem zweiten Spannungswert ($U_{0,2}$), der Leerlauf-Referenzspannung ($U_{0,Ref}$) und der Referenz-MPP-Leistung ($P_{MPP,Ref}$), oder
        - einer Kombination aus zweitem Stromwert ($I_{SC,2}$), Kurzschluss-Referenzstrom ($I_{SC,Ref}$), zweitem Spannungswert ($U_{0,2}$), Leerlauf-Referenzspannung ($U_{0,Ref}$) und der Referenz-MPP Leistung ($P_{MPP,Ref}$) bestimmt wird.

2. Verfahren nach Anspruch 1, wobei bei einer Bestimmung der Leerlauf-Referenzspannung ($U_{0,Ref}$) und/oder des zweiten Spannungswertes ($U_{0,2}$) ein Strom der benachbartem PV-Module (5) über einen Bypasspfad der Koppeleinheit (2) an dem der Koppeleinheit (2) zugeordneten PV-Modul (5) vorbeigeleitet wird.

3. Verfahren nach Anspruch 1 oder 2, **wobei** die Referenzwerte über einen Kennlinien-Sweep der I-U-Kennlinie oder über ein sequentielles, zumindest kurzzeitiges Versetzen des der Koppeleinheit (2) zugeordneten PV-Moduls (5) in die entsprechenden Betriebsmodi aus Kurzschluss-, Leerlauf- und MPP-Betriebsmodus erzeugt werden.

4. Verfahren nach einem der Ansprüche 1 bis 3, wobei

   - im abgeregelten Zustand der PV-Anlage (1) wiederholt und zu aufeinanderfolgenden Zeiten für das der Koppeleinheit (2) zugeordnete PV-Modul (5) den Kurzschluss-Betriebsmodus kennzeichnende zweite Stromwerte ($I_{SC,2}$) und/oder den Leerlauf-Betriebsmodus kennzeichnende zweite Spannungswerte ($U_{0,2}$) ermittelt werden, und
   - wobei die aktuell maximal mögliche Leistung ($P_{max}$) aus den jeweils zuletzt bestimmten Größen aus zweitem Stromwert ($I_{SC,2}$) und/oder zweitem Spannungswert ($U_{0,2}$) und den Referenzwerten aus Referenz-MPP-Leistung ($P_{MPP,Ref}$), Kurzschluss-Referenzstrom ($I_{SC,Ref}$) und/oder Leerlauf-Referenzspannung ($U_{0,Ref}$) bestimmt wird.

5. Verfahren nach einem der Ansprüche 1 bis 4, wobei im abgeregelten Zustand der PV-Anlage (1) diejenigen PV-Module (5) des Strings (6), denen keine Koppeleinheit (2) zugeordnet ist, in Leerlaufrichtung abgeregelt betrieben werden.

6. Verfahren nach einem der Ansprüche 1 bis 5, wobei bei der Bestimmung der Referenzwerte für das der Koppeleinheit (2) zugeordnete PV-Modul (5) auch die PV-Anlage (1) bei maximaler Leistung ($P_{max}$) betrieben wird.

7. Verfahren nach einem der Ansprüche 1 bis 6, wobei eine Bestimmung der Referenzwerte für das der Koppeleinheit (2) zugeordnete PV-Modul (5) bei einem aktivierten MPP-Tracking des Strings (6) und daher mit einer Veränderung der Spannung des Strings (6) erfolgt.

8. Verfahren nach einem der Ansprüche 1 bis 6, wobei ein Wechsel des der Koppeleinheit (2) zugeordneten PV-Moduls (5) in einen Kurzschluss-Betriebsmodus und/oder in einen Leerlauf-Betriebsmodus bei deaktiviertem MPP-Tracking des Strings (6) und daher ohne Veränderung der Spannung des Strings (6) erfolgt.

9. Verfahren nach einem der vorangehenden Ansprüche, wobei bei der Bestimmung des zweiten Stromwertes ($I_{SC,2}$) oder des zweiten Spannungswertes ($U_{0,2}$) das PV-Modul (5) dauerhaft in dem jeweiligen Betriebsmodus aus Kurzschluss- und Leerlauf-Betriebsmodus betrieben wird, und wobei optional lediglich kurzzeitig in den jeweils anderen Betriebsmodus aus Leerlauf- und Kurzschluss-Betriebsmodus gewechselt wird.

10. Verfahren nach einem der vorangehenden Ansprüche, wobei bei der Bestimmung des zweiten Stromwertes ($I_{SC,2}$) und/oder des zweiten Spannungswertes ($U_{0,2}$) zumindest ein innerhalb einer Verbindungsleitung (30, 31) der Koppeleinheit (2) angeordneter Schalter ($S_2$, $S_4$) geöffnet ist.

11. Photovoltaik, PV,- Anlage (1) umfassend

   - einen zumindest einen String (6) aufweisenden Photovoltaik (PV) - Generator (8), wobei der zumindest eine String (6) eine Reihenschaltung von PV-Modulen (5) beinhaltet, bei der zumindest ein PV-Modul (5) über eine Koppeleinheit (2) mit benachbarten PV-Modulen (5) des Strings (6) verbunden ist,
   - einen Wechselrichter (3), der eingangsseitig mit dem PV-Generator (8) und ausgangsseitig mit einem Energieversorgungsnetz (4) verbunden ist,
   - eine Steuerung (7, 7.1) zur Steuerung des Wechselrichters (3) und der Koppeleinheit (2),
   - wobei die PV-Anlage (1) zur Durchführung des Verfahrens nach einem der vorangehenden Ansprüche ausgelegt ist.

**12.** PV-Anlage (1) nach Anspruch 11, wobei die Koppeleinheit (2)

- zwei Eingangsanschlüsse (20a, 20b) zum Anschluss des ihr zugeordneten PV-Moduls (5),
- zwei mit den Eingangsanschlüssen (20a, 20b) über Verbindungsleitungen (30, 31) elektrisch verbundene Ausgangsanschlüsse (21a, 21b) zum Anschluss an die Reihenschaltung, und
- einen Stromsensor (26.2) zur Detektion eines Eingangsstroms ($I_{ein}$) und/oder einen Spannungssensor (26.1) zur Detektion einer Eingangsspannung ($U_{ein}$)

umfasst.

**13.** PV-Anlage (1) nach Anspruch 11 oder 12, wobei die Koppeleinheit (2)

- zumindest einen zwischen den Verbindungsleitungen (30, 31) angeordneten und über die Steuerung (7, 7.1) ansteuerbaren Schalter ($S_1$, $S_3$) zum Kurzschließen des an die Koppeleinheit (2) angeschlossenen PV-Moduls (5), und/oder
- zumindest einen innerhalb einer der Verbindungsleitungen (30, 31) angeordneten und über die Steuerung (7, 7.1) ansteuerbaren Schalter ($S_2$, $S_4$) umfasst.

**14.** PV-Anlage (1) nach einem der Ansprüche Anspruch 11 bis 13, wobei die Koppeleinheit (2) einen DC/DC-Wandler, insbesondere einen Hochsetzsteller oder einen kombinierten Hoch-Tiefsetzsteller aufweist.

**15.** PV-Anlage (1) nach einem der Ansprüche 11 bis 14, wobei die Koppeleinheit (2) eine Kommunikationseinheit (27) aufweist.

**Claims**

**1.** Method for determining a currently maximum possible power ($P_{max}$) of a photovoltaic, PV, installation (1) operated in a curtailed manner and comprising a PV generator (8) having at least one string (6), wherein the at least one string (6) comprises a series circuit of PV modules (5), in which at least one PV module (5) is connected to adjacent PV modules (5) in the string (6) via a coupling unit (2), an inverter (3) which is connected, on the output side, to an energy supply grid (4) and is connected, on the input side, to the PV generator (8), a controller (7, 7.1) for controlling the inverter (3) and the coupling unit (2), wherein the controller (7, 7.1), in conjunction with the coupling unit (2), is designed to vary a power drain of the PV module (5) assigned to it relative to a power drain of the adjacent PV modules (5) during operation of the PV installation (1), having the steps of:

- determining reference values for the PV module (5) assigned to the coupling unit (2), comprising a reference MPP power ($P_{MPP,Ref}$) and at least one value, from a short circuit reference current ($I_{SC,Ref}$) and/or an open circuit reference voltage ($U_{0,Ref}$), that is assigned to the reference MPP power ($P_{MPP,Ref}$),
- operating the PV installation (1), in response to a curtailment signal, in a curtailed state with a lower power (P) than the currently maximum possible power ($P_{max}$) of the PV installation (1), **characterized in that**
- for the PV module (5) assigned to the coupling unit (2) in the curtailed state of the PV installation (1),

  - a second current value $I_{SC,2}$) indicating a short circuit operating mode is determined, and/or
  - a second voltage value ($U_{0,2}$) indicating an open circuit operating mode is determined, and

- wherein the currently maximum possible power ($P_{max}$) in the curtailed state of the PV installation (1) is determined from

  - the second current value ($I_{SC,2}$), the short circuit reference current ($I_{SC,Ref}$) and the reference MPP power ($P_{MPP,Ref}$), or
  - the second voltage value ($U_{0,2}$), the open circuit reference voltage ($U_{0,Ref}$) and the reference MPP power ($P_{MPP,Ref}$), or
  - a combination of the second current value ($I_{SC,2}$), the short circuit reference current ($I_{SC,Ref}$), the second voltage value ($U_{0,2}$), the open circuit reference voltage ($U_{0,Ref}$) and the reference MPP power ($P_{MPP,Ref}$).

**2.** Method according to Claim 1, wherein a current of the adjacent PV modules (5) is guided past the PV module (5) assigned to the coupling unit (2) via a bypass path of the coupling unit (2) when determining the open circuit reference

EP 3 580 826 B1

voltage ($U_{0,Ref}$) and/or the second voltage value ($U_{0,2}$).

3. Method according to Claims 1 or 2, **wherein** the reference values are generated using a characteristic curve sweep of the I/U characteristic curve or by sequentially, at least briefly changing the PV module (5) assigned to the coupling unit (2) to the corresponding operating modes comprising the short circuit operating mode, the open circuit operating mode and the MPP operating mode.

4. Method according to one of Claims 1 to 3, **wherein**

- for the PV module (5) assigned to the coupling unit (2) in the curtailed state of the PV installation (1), second current values $I_{SC,2}$) indicating the short circuit operating mode and/or second voltage values ($U_{0,2}$) indicating the open circuit operating mode are determined repeatedly and at successive times, and
- wherein the currently maximum possible power ($P_{max}$) is determined from the respectively last determined variables comprising the second current value $I_{SC,2}$) and/or the second voltage value ($U_{0,2}$) and the reference values comprising the reference MPP power ($P_{MPP,Ref}$), the short circuit reference current ($I_{SC,Ref}$) and/or the open circuit reference voltage ($U_{0,Ref}$).

5. Method according to one of Claims 1 to 4, **wherein** those PV modules (5) in the string (6) which are not assigned a coupling unit (2) are operated in a curtailed manner in the open-circuit direction in the curtailed state of the PV installation (1).

6. Method according to one of Claims 1 to 5, **wherein** the PV installation (1) is also operated at maximum power ($P_{max}$) when determining the reference values for the PV module (5) assigned to the coupling unit (2).

7. Method according to one of Claims 1 to 6, **wherein** the reference values for the PV module (5) assigned to the coupling unit (2) are determined with activated MPP tracking of the string (6) and therefore with a change in the voltage of the string (6).

8. Method according to one of Claims 1 to 6, **wherein** the PV module (5) assigned to the coupling unit (2) is changed to a short circuit operating mode and/or to an open circuit operating mode with deactivated MPP tracking of the string (6) and therefore without a change in the voltage of the string (6).

9. Method according to one of the preceding claims, **wherein** the PV module (5) is permanently operated in the respective operating mode comprising the short circuit operating mode and the open circuit operating mode when determining the second current value $I_{SC,2}$) or the second voltage value ($U_{0,2}$), and wherein there is optionally only a brief change to the respective other operating mode comprising the open circuit operating mode and the short circuit operating mode.

10. Method according to one of the preceding claims, **wherein** at least one switch ($S_2$, $S_4$) arranged inside a connecting line (30, 31) of the coupling unit (2) is open when determining the second current value $I_{SC,2}$) and/or the second voltage value ($U_{0,2}$).

11. Photovoltaic, PV, installation (1) comprising

- a photovoltaic (PV) generator (8) having at least one string (6), wherein the at least one string (6) comprises a series circuit of PV modules (5), in which at least one PV module (5) is connected to adjacent PV modules (5) in the string (6) via a coupling unit (2),
- an inverter (3) which is connected, on the input side, to the PV generator (8) and is connected, on the output side, to an energy supply grid (4),
- a controller (7, 7.1) for controlling the inverter (3) and the coupling unit (2),
- wherein the PV installation (1) is designed to carry out the method according to one of the preceding claims.

12. PV installation (1) according to Claim 11, wherein the coupling unit (2) comprises

- two input connections (20a, 20b) for connecting the PV module (5) assigned to the coupling unit,
- two output connections (21a, 21b) which are electrically connected to the input connections (20a, 20b) via connecting lines (30, 31) and are intended to be connected to the series circuit, and
- a current sensor (26.2) for detecting an input current ($I_{ein}$) and/or a voltage sensor (26.1) for detecting an input

voltage ($U_{ein}$).

**13.** PV installation (1) according to Claims 11 or 12, **wherein** the coupling unit (2) comprises

- at least one switch ($S_1$, $S_3$) which is arranged between the connecting lines (30, 31), can be controlled via the controller (7, 7.1) and is intended to shortcircuit the PV module (5) connected to the coupling unit (2), and/or
- at least one switch ($S_2$, $S_4$) which is arranged inside one of the connecting lines (30, 31) and can be controlled via the controller (7, 7.1).

**14.** PV installation (1) according to one of Claims 11 to 13, **wherein** the coupling unit (2) comprises a DC/DC converter, in particular a boost converter or a combined boost/buck converter.

**15.** PV installation (1) according to one of Claims 11 to 14, **wherein** the coupling unit (2) comprises a communication unit (27).

## Revendications

**1.** Procédé pour déterminer une puissance maximale (Pmax) actuellement possible d'une installation photovoltaïque (1) fonctionnant en mode régulé, comprenant un générateur photovoltaïque (8) présentant au moins un string (6), la au moins un string (6) comprenant un montage en série de panneaux photovoltaïques (5), dans lequel au moins un panneau photovoltaïque (5) est relié par une unité de couplage (2) à des panneaux photovoltaïques (5) voisins du string (6), un onduleur (3) qui est relié côté sortie à un réseau d'alimentation en énergie (4) et côté entrée au générateur photovoltaïque (8), une commande (7, 7. 1) pour commander l'onduleur (3) et l'unité de couplage (2), la commande (7, 7.1) étant conçue, en liaison avec l'unité de couplage (2), pour faire varier, pendant un fonctionnement de l'installation photovoltaïque (1), un prélèvement de puissance des panneaux photovoltaïques (5) qui lui est associé par rapport à un prélèvement de puissance des panneaux photovoltaïques (5) voisins, comprenant les étapes suivantes :

- détermination de valeurs de référence pour le panneau photovoltaïque (5) associé à l'unité de couplage (2) comprenant une puissance MPP de référence (PMPP,Ref) et au moins une valeur associée à la puissance MPP de référence (PMPP,Ref) à partir du courant de référence de court-circuit (ISC, Ref) et/ou de la tension de référence en circuit ouvert (U0,Ref),
- faire fonctionner l'installation photovoltaïque (1) en réponse à un signal de régulation dans un état régulé avec une puissance (P) inférieure à la puissance maximale (Pmax) actuellement possible de l'installation photovoltaïque (1), **caractérisé en ce que**,
- dans l'état régulé de l'installation photovoltaïque (1) pour le panneau photovoltaïque (5) associé à l'unité de couplage (2),

- une deuxième valeur de courant (ISC, 2) caractérisant un mode de fonctionnement en court-circuit est déterminée, et/ou
- une deuxième valeur de tension (U0, 2) caractérisant un mode de fonctionnement à vide est déterminée, et

- la puissance maximale (Pmax) actuellement possible dans l'état régulé de l'installation photovoltaïque (1) étant calculée à partir

- de la deuxième valeur de courant (ISC, 2), du courant de référence de court-circuit (ISC,Ref) et de la puissance MPP de référence (PMPP,Ref), ou
- de la deuxième valeur de tension (U0,2), de la tension de référence à vide (U0,Ref) et de la puissance MPP de référence (PMPP,Ref), ou
- une combinaison de la deuxième valeur de courant (ISC,2), du courant de référence de court-circuit (ISC,Ref), de la deuxième valeur de tension (U0,2), de la tension de référence en circuit ouvert (U0,Ref) et de la puissance MPP de référence (PMPP,Ref)

est déterminée.

**2.** Procédé selon la revendication 1, dans lequel, lors d'une détermination de la tension de référence en circuit ouvert (U0,Ref) et/ou de la deuxième valeur de tension (U0,2), un courant des panneaux photovoltaïques voisins (5) est dérivé par un chemin de dérivation de l'unité de couplage (2) devant le panneau photovoltaïque (5) associé à l'unité de couplage (2).

3. Procédé selon la revendication 1 ou 2, dans lequel les valeurs de référence sont générées par un balayage de la courbe caractéristique I-V ou par un déplacement séquentiel, au moins de courte durée, du panneau photovoltaïque (5) associé à l'unité de couplage (2) dans les modes de fonctionnement correspondants parmi les modes de fonctionnement en court-circuit, en circuit ouvert et MPP.

4. Procédé selon l'une des revendications 1 à 3, dans lequel,

- lorsque l'installation photovoltaïque (1) est en état de coupure, des deuxièmes valeurs de courant (ISC,2) caractérisant le mode de fonctionnement en court-circuit et/ou des deuxièmes valeurs de tension (U0,2) caractérisant le mode de fonctionnement à vide sont déterminées de manière répétée et à des moments successifs pour le panneau photovoltaïque (5) associé à l'unité de couplage (2), et
- la puissance maximale actuellement possible (Pmax) étant déterminée à partir des grandeurs respectivement déterminées en dernier lieu à partir de la deuxième valeur de courant (ISC,2) et/ou de la deuxième valeur de tension (U0,2) et des valeurs de référence à partir de la puissance MPP de référence (PMPP,Ref), du courant de référence en court-circuit (ISC,Ref) et/ou de la tension de référence en circuit ouvert (U0,Ref).

5. Procédé selon l'une des revendications 1 à 4, dans lequel, à l'état régulé de l'installation photovoltaïque (1), les panneaux photovoltaïques (5) du string (6) auxquels aucune unité de couplage (2) n'est associée sont régulés dans le sens de la marche à vide.

6. Procédé selon l'une des revendications 1 à 5, dans lequel, lors de la détermination des valeurs de référence pour le panneau photovoltaïque (5) associé à l'unité de couplage (2), l'installation photovoltaïque (1) est également exploitée à la puissance maximale (Pmax).

7. Procédé selon l'une des revendications 1 à 6, dans lequel une détermination des valeurs de référence pour le panneau photovoltaïque (5) associé à l'unité de couplage (2) est effectuée lorsque le suivi MPP du string (6) est activé et donc avec une modification de la tension du string (6).

8. Procédé selon l'une des revendications 1 à 6, dans lequel un passage du panneau photovoltaïque (5) associé à l'unité de couplage (2) dans un mode de fonctionnement en court-circuit et/ou dans un mode de fonctionnement à vide s'effectue lorsque le suivi MPP du string (6) est désactivé et donc sans modification de la tension du string (6).

9. Procédé selon l'une des revendications précédentes, dans lequel, lors de la détermination de la deuxième valeur de courant (ISC,2) ou de la deuxième valeur de tension (U0,2), le panneau photovoltaïque (5) est exploité en permanence dans le mode de fonctionnement respectif parmi le mode de fonctionnement en court-circuit et le mode de fonctionnement à vide, et dans lequel, en option, on ne passe que brièvement dans l'autre mode de fonctionnement respectif parmi le mode de fonctionnement à vide et le mode de fonctionnement en court-circuit.

10. Procédé selon l'une des revendications précédentes, dans lequel, lors de la détermination de la deuxième valeur de courant (ISC,2) et/ou de la deuxième valeur de tension (U0,2), au moins un commutateur (S2, S4) disposé à l'intérieur d'une ligne de liaison (30, 31) de l'unité de couplage (2) est ouvert.

11. Installation photovoltaïque, PV, (1) comprenant

- un générateur photovoltaïque (PV) (8) présentant au moins une chaîne (6), la au moins un string (6) comprenant un montage en série de panneaux photovoltaïques (5), dans lequel au moins un panneau photovoltaïque (5) est relié par une unité de couplage (2) à des panneaux photovoltaïques (5) voisins du string (6),
- un onduleur (3) qui est relié côté entrée au générateur photovoltaïque (8) et côté sortie à un réseau d'alimentation en énergie (4),
- une commande (7, 7.1) pour commander l'onduleur (3) et l'unité de couplage (2),
- l'installation photovoltaïque (1) étant conçue pour la mise en œuvre du procédé selon l'une des revendications précédentes.

12. Installation photovoltaïque (1) selon la revendication 11, dans laquelle l'unité de couplage (2) comprend

- deux bornes d'entrée (20a, 20b) pour le raccordement du panneau photovoltaïque (5) qui lui est associé,
- deux bornes de sortie (21a, 21b) reliées électriquement aux bornes d'entrée (20a, 20b) par des lignes de liaison (30, 31) pour le raccordement au circuit série, et
- un capteur de courant (26.2) pour la détection d'un courant d'entrée (Iein) et/ou un capteur de tension (26.1) pour la détection d'une tension d'entrée (Uein).

13. Installation photovoltaïque (1) selon la revendication 11 ou 12, dans laquelle l'unité de couplage (2) comprend au moins un interrupteur (S1, S3) disposé entre les lignes de liaison (30, 31) et pouvant être commandé par l'intermédiaire de la commande (7, 7.1) pour court-circuiter le panneau photovoltaïque (5) raccordé à l'unité de couplage (2), et/ou au moins un interrupteur (S2, S4) disposé à l'intérieur d'une des lignes de liaison (30, 31) et pouvant être commandé par l'intermédiaire de la commande (7, 7.1).

14. Installation photovoltaïque (1) selon l'une des revendications 11 à 13, dans laquelle l'unité de couplage (2) comporte un convertisseur DC/DC, notamment un convertisseur élévateur ou un convertisseur combiné élévateur/abaisseur.

15. Installation photovoltaïque (1) selon l'une des revendications 11 à 14, dans laquelle l'unité de couplage (2) comporte une unité de communication (27).

Fig. 1

Fig. 2

Betrieb PV-Modul

Betrieb PV-Anlage

VS1 — MPP Betrieb

VS2 — Detektion $I_{MPP}$, $U_{MPP}$

VS3 — kurzschlussnaher Betrieb Detektion $I_{SC,Ref}$

VS4 — leerlaufnaher Betrieb Detektion $U_{0,Ref}$

VS5 — kurzschlussnaher Betrieb Detektion $I_{SC,2}$

VS6 — leerlaufnaher Betrieb Detektion $U_{0,2}$

VS7 — Bestimmung $P_{max}$

VS8 — Abregelung weiter gefordert — ja / nein

MPP Betrieb

abgeregelter Betrieb

EP 3 580 826 B1

**Fig. 3a**

EP 3 580 826 B1

**Fig. 3b**

EP 3 580 826 B1

**Fig. 4a**

EP 3 580 826 B1

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110196543 A1
- DE 102010038941 A1
- US 20160105146 A1

**In der Beschreibung aufgeführte Nicht-Patentliteratur**

- Comparison of Photovoltaic Array Maximum Power Point Tracking Techniques. *IEEE TRANSACTIONS ON ENERGY CONVERSION,* Juni 2007, vol. 22 (2), 439-449